# EUROPÄISCHE PATENTSCHRIFT

(11) **EP 4 144 498 B1**
(45) Veröffentlichungstag und Bekanntmachung des Hinweises auf die Patenterteilung: **04.12.2024**
(21) Anmeldenummer: 21195135.5
(22) Anmeldetag: 06.09.2021
(51) Int. Cl.: B29B 15/10

(54) **VERFAHREN UND VORRICHTUNG ZUM TRÄNKEN EINES FASERHALBZEUGS MIT EINEM FLÜSSIGEN MATRIXSYSTEM**
METHOD AND APPARATUS FOR IMPREGNATING A SEMI-FINISHED FIBRE PRODUCT WITH A LIQUID MATRIX SYSTEM
PROCÉDÉ ET DISPOSITIF DE TREMPAGE D'UN DEMI-PRODUIT FIBREUX DOTÉ D'UN SYSTÈME MATRICIEL LIQUIDE

(43) Veröffentlichungstag der Anmeldung: 08.03.2023
(73) Patentinhaber: Universität Stuttgart, 70174 Stuttgart (DE)
(72) Erfinder: Engelfried, Mathias, 70180 Stuttgart (DE); Grisin, Benjamin, 70180 Stuttgart (DE)
(74) Vertreter: Patentanwälte Ruff, Wilhelm, Beier, Dauster & Partner mbB

(56) Entgegenhaltungen:
- DE-A1- 102017 206 999
- DE-C1- 19 637 795
- US-B1- 6 207 002

## Beschreibung

### Anwendungsgebiet und Stand der Technik

Die Erfindung betrifft ein Verfahren zum Tränken bzw. Imprägnieren eines Faserhalbzeugs mit einem flüssigen Matrixsystem sowie eine hierfür ausgebildete Vorrichtung. Dabei soll insbesondere ein Textil oder ein Faserverbund bzw. ein textiler Vorformling aus technischen Fasern oder Naturfasern mit einem flüssigen Matrixsystem bzw. mit Flüssigharz getränkt und imprägniert werden, um anschließend ausgehärtet zu werden, um damit ein Teil als Faserverbundwerkstoff zu bilden.

Aus der DE 10 2017 206 999 A1 ist ein grundsätzlich ähnliches Verfahren bekannt, bei dem ein Faserhalbzeug in einer flexiblen und abdichtbaren Umhüllung mit einem flüssigen Matrixsystem getränkt wird. Dabei wird die Umhüllung nach einem Einbringen von flüssigem Matrixsystem und Faserhalbzeug darin evakuiert bzw. abgesaugt, und dann breitet sich das Matrixsystem aufgrund des Unterdrucks in der Umhüllung im Wesentlichen selbsttätig aus und durchtränkt das Faserhalbzeug. So kann der Aufwand für das Tränken eines einzelnen Faserhalbzeugs relativ gering gehalten werden. Gleichzeitig besteht in manchen Fällen das Bedürfnis, das Verfahren zielgenauer durchführen und möglicherweise beeinflussen zu können.

Bei Vakuuminfusionverfahren VARI und VAP nach dem Stand der Technik kommen viele Folienmaterialien, Membrane, Schläuche, Dichtbänder und vor allem auch Fließhilfen zum Einsatz. Dies ist unter anderem aus der EP 1420940 B1 oder der DE 10013409 C1 bekannt. Mittels Vakuumfolien und Dichtbändern werden auf Formwerkzeugen Vakuumkammern aufgebaut, in welche die zu tränkenden Faserhalbzeuge gelegt werden. Über Schläuche werden aus Reservoirs für flüssiges Matrixsystem Angüsse innerhalb der Vakuumkammern geführt. Zur Steuerung des Tränkens werden Fließhilfen eingesetzt, welche es ermöglichen den Fließwiderstand zu beeinflussen und eine gleichmäßige Imprägnierung zu gewährleisten. Um die Prozesshilfen nach dem Aushärten des Matrixsystems voneinander lösen zu können, kommen perforierte Trennfolien und Abreißgewebe zum Einsatz.

Ein weiteres Verfahren zur Imprägnierung von Faserhalbzeugen ist das sogenannte Prepreg Verfahren. In der Literatur wird eine Vielzahl an Varianten beschrieben. Alle Varianten haben weitestgehend gemeinsam, dass die Imprägnierung der Faserhalbzeuge offen über Harzbädern, durch Aufsprühen und Einwalzen und wieder Abstreifen von überschüssigem Matrixsystem ausgeführt wird. Es handelt sich um offene und kontinuierliche Prozesse. Exemplarisch werden die AU 30864/89 A und die EP 0363794 A genannt.

Prepreg-Anlagen nach dem Stand der Technik können nur große Fasermengen in Form von Einzelrovings und textilen bahnförmigen Halbzeugen wie Gewebe, Gelege oder Tapes tränken. Endkonturnahe Halbzeuge sind damit nicht verarbeitet bar. Die Variation des Matrixsystems ist aufgrund der Anlagengröße und Komplexität nur mit hohem Aufwand auszuführen. Eine Individualisierung des Matrixsystems und kleine und kleinste Mengen sind nicht bzw nur mit sehr hohem Aufwand möglich.

Aus der US 6,207,002 B1 sind ein Verfahren sowie eine Vorrichtung bekannt, um ein Faserhalbzeug mit einem flüssigen Matrixsystem bzw. mit einem Flüssigharz zu tränken. Das Faserhalbzeug liegt dabei in flacher Form vor und befindet sich in einer Umhüllung. Quer über die Umhüllung verläuft eine Zusammendrückwalze, um das Flüssigharz sowohl möglichst breit zu verteilen als auch in das Faserhalbzeug hineinzudrücken. Dabei kann aber nicht in jedem Fall gewährleistet werden, dass das Flüssigharz auch über die gesamte Breite des Faserhalbzeugs verteilt wird.

### Aufgabe und Lösung

Der Erfindung liegt die Aufgabe zugrunde, ein eingangs genanntes Verfahren sowie eine eingangs genannte Vorrichtung zu schaffen, mit denen Probleme des Standes der Technik gelöst werden können und es insbesondere möglich ist, das Tränken eines Faserhalbzeugs gezielt und beeinflussbar vornehmen zu können sowie optimieren zu können, insbesondere im Hinblick auf den Anteil von flüssigem Matrixsystem in dem Faserhalbzeug.

Gelöst wird diese Aufgabe durch ein Verfahren mit den Merkmalen des Anspruchs 1 sowie durch eine Vorrichtung mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für die Vorrichtung beschrieben. Sie sollen jedoch unabhängig davon sowohl für das Verfahren als auch für eine entsprechende Vorrichtung selbständig und unabhängig voneinander gelten können. Der Wortlaut der Ansprüche wird durch ausdrückliche Bezugnahme zum Inhalt der Beschreibung gemacht.

Es ist vorgesehen, dass das Faserhalbzeug in flacher Form bereitgestellt wird, vorteilhaft bereits in zugeschnittener Form, endkontur/endkonturnaher Form oder als textile Preform. Alternativ kann auch das mit flüssigem Matrixsystem getränkte Faserhalbzeug später noch wie gewünscht zugeschnitten und/oder allgemein geformt werden. Das Faserhalbzeug wird in flacher Form in eine Umhüllung eingebracht, die flexibel und abdichtbar ist. Vorteilhaft ist die Umhüllung ein Schlauch, beispielsweise aus Folie bzw. als Folienschlauch, der an einem oder an beiden Enden offen sein kann. Er kann auch aus zwei miteinander verbunden Lagen bestehen. Für die Flexibilität kann er dünn ausgebildet sein und somit materialsparend sein. Die Umhüllung kann auch an die Kontur des textilen Faserhalbzeugs angepasst werden. Vorteilhaft ist die Kontur an das Faserhalbzeug anzupassen. Dies führt zu weniger Verlust an Matrixsystem und zu einem gezielter steuerbaren Fließverhalten des Matrixsystems. Des Weiteren kann so eine Bearbeitung des darin angeordneten Faserhalbzeugs erfolgen, ggf. auch eine vorteilhafte Formgebung in einer Presse, Form odgl.. Ein Abdichten bzw. Verschließen der Umhüllung ist an sich aus dem Stand der Technik bekannt und kann entweder durch Zukleben oder Zuschweißen erfolgen, was sehr einfach ist. Alternativ können Anschlüsse wie Absaugventile odgl. angeordnet sein oder angeordnet werden. Das flüssige Matrixsystem wird ebenfalls in die Umhüllung eingebracht. Dies kann unabhängig vom Einbringen des Faserhalbzeugs erfolgen, so dass die Reihenfolge im Wesentlichen beliebig ist. Vorteilhaft ist hier vorgesehen, dass das flüssige Matrixsystem getrennt von dem Faserhalbzeug und mit Abstand zu diesem in die Umhüllung eingebracht wird, wobei ein Abstand besonders vorteilhaft zwischen 2 cm und 30 cm oder zwischen 5 cm und 15 cm liegen kann.

In einem nächsten Schritt wird auf die Umhüllung, in der sich das Faserhalbzeug und das flüssige Matrixsystem befinden, über die gesamte Breite der Umhüllung durchgehend und lückenlos Druck von oben und/oder von unten aufgebracht, was ein im Folgenden näher beschriebenes erfindungsgemäßes Zusammendrücken bildet. Dieses Zusammendrücken kann an einem Endbereich der Umhüllung beginnen. Ein Druck des Zusammendrückens sollte mindestens 0,1 N/cm² betragen bzw., falls der Druck streifenartig oder linienartig aufgebracht wird, mindestens 0,5 N/cm auf die Länge des Zusammendrückens bezogen. Dieses Zusammendrücken wird kontinuierlich bzw. zumindest ohne Unterbrechung entlang einer Laufrichtung des Verfahrens mindestens so weit durchgeführt, dass es sich über die gesamte Länge des Faserhalbzeugs hinzieht. Somit wird das gesamte Faserhalbzeug samt flüssigem Matrixsystem einmal sozusagen zusammengedrückt. Die genannte Laufrichtung erstreckt sich dabei von einem ersten Endbereich der Umhüllung hin zu einem zweiten Endbereich der Umhüllung, wobei sich dies auf die Richtungsangabe bezieht. Das Zusammendrücken muss nicht zwingend von einem äußersten Ende an einem Endbereich der Umhüllung bis zum gegenüberliegenden anderen äußersten Ende erfolgen. Dies kann aber im Wesentlichen von knapp vor Ende bis zum anderen Endbereich gemacht werden. Auf alle Fälle sollte das Zusammendrücken aber an einem Bereich der Umhüllung beginnen, der so gewählt ist, dass sich zwischen dem beginnenden Zusammendrücken und dem Faserhalbzeug das flüssige Matrixsystem befindet. So kann sichergestellt werden, dass das flüssige Matrixsystem sozusagen von einem Ende des Faserhalbzeugs her in zusammengedrückter Weise bzw. bei zusammengedrückter Umhüllung an das Faserhalbzeug heran und entlang der Laufrichtung über diesen hinweg bewegt wird. Dabei wird das flüssige Matrixsystem durch das Zusammendrücken zum einen mit Kraft bzw. Druck in das Faserhalbzeug hineingedrückt, was das Tränken unterstützt. Zum anderen wird sozusagen überschüssiges flüssiges Matrixsystem wieder aus dem Faserhalbzeug herausgedrückt, so dass nicht zu viel davon darin verbleibt, was nicht vorteilhaft wäre. Insgesamt kann somit durch das Zusammendrücken erreicht werden, dass eine definierte bzw. definierbare Menge an flüssigem Matrixsystem in dem Faserhalbzeug verbleibt. So kann der Faservolumengehalt eines fertigen Bauteils möglichst genau eingestellt werden, was für dessen Gewicht und Festigkeit sowie für Verbrauch an Material zu seiner Herstellung sehr vorteilhaft ist.

Durch das Zusammendrücken der Umhüllung kann zusätzlich dazu, dass sich das Faserhalbzeug möglicherweise von alleine zum Teil mit dem flüssigen Matrixsystem vollsaugt, das Tränken gezielt beeinflusst werden, insbesondere um das Tränken des Faserhalbzeugs mit dem flüssigen Matrixsystem möglichst vollständig und optimiert durchführen zu können. Dabei kann als eines der Hauptziele der Gehalt des fertig getränkten Faserhalbzeugs mit flüssigem Matrixsystem bzw. das Verhältnis der beiden Anteile in einem getränkten Faserhalbzeug beeinflusst werden, also der Faservolumengehalt. Insbesondere kann erreicht werden, dass das Faserhalbzeug zwar mit dem flüssigen Matrixsystem vollständig durchtränkt worden ist, diese aber möglicherweise wieder durch das Zusammendrücken zumindest teilweise entfernt worden ist. So kann eben ein möglichst geringer Anteil an flüssigem Matrixsystem in dem fertig getränkten Faserhalbzeug erreicht werden. Das Einstellen eines speziellen Faservolumengehalts ist vor allem bei der Verwendung von Naturfasern für das Faserhalbzeug von Bedeutung. Dort besteht nämlich das Problem, dass Naturfasern deutlich mehr flüssiges Matrixsystem bzw. Flüssigkeit aufnehmen können als sonst übliche vorgenannte technische Fasern. Ein Teil davon muss wieder herausgedrückt werden.

In Ausgestaltung der Erfindung kann vorgesehen sein, dass ein Druck des Zusammendrückens über die Breite der Umhüllung hinweg bzw. entlang des Zusammendrückens, was vorteilhaft senkrecht zur vorgenannten Laufrichtung erfolgt, um maximal 20% eines Maximalwerts des Zusammendrückens variiert. Vorzugsweise erfolgt das Zusammendrücken möglichst oder vollständig gleichmäßig, so dass über die Breite des Zusammendrückens hinweg der Anteil an flüssigem Matrixsystem im durchtränkten Faserhalbzeug möglichst gleich ist. Gleichzeitig kann ein Druck des Zusammendrückens oder sozusagen eine Art Höhenprofil auch daran angepasst werden, ob eine Auflage für die Umhüllung, auf der das Zusammendrücken durchgeführt wird, sowie auch die Umhüllung selbst flach bzw. plan sind oder nicht. Möglicherweise kann nämlich die Auflage, auf der die Umhüllung liegt und auf der das Verfahren durchgeführt wird, profiliert sein bzw. eine Art Vertiefung oder Einbuchtung aufweisen, durch welche eine mindestens teilweise Formgebung des Faserhalbzeugs beim Tränken mit flüssigem Matrixsystem erfolgen kann. Das Vorsehen einer Art Bett oder Vertiefung in der Auflage, in der das Faserhalbzeug zumindest teilweise liegt, kann helfen, einen Druck des Zusammendrückens genauer und definierter einstellen zu können. Hier ist es beispielsweise möglich, die Auflage zumindest teilweise aus einem sogenannten Formgedächtnismaterial, insbesondere einem Formgedächtnis-Kunststoff, zu fertigen bzw. vorzusehen. So kann eine Form einer Vertiefung variiert werden zur Anpassung an unterschiedliche Gegebenheiten. Eine Alternative ist eine sogenannte Vakuummatratze als mit Schüttgut, beispielsweise Sand oder Styroporkugeln, gefüllter Sack. Dieser kann vakuumiert bzw. abgesaugt werden und behält dann genau die Form, die für ihn vorgegeben worden ist.

In entsprechender Form könnte auch das Zusammendrücken selbst mit einem bestimmten Profil erfolgen, also quasi nicht durchgehend gerade bzw. plan, sondern beispielsweise mit einem flächigen Auflageprofil. Das Profil kann hierbei die entgegengesetzte Dickenverteilung des Faserhalbzeugs abbilden, um eine über die Länge konstanten bzw. über die Breite homogenen Druck zu gewährleisten.

In vorteilhafter Ausgestaltung der Erfindung kann ein Unterdruck an das Innere der Umhüllung angelegt werden, insbesondere um Luft daraus abzusaugen. Dies verbessert das Tränken des Faserhalbzeugs mit dem flüssigen Matrixsystem stark, wie aus dem vorgenannten Stand der Technik auch bekannt ist. Ein weiterer Vorteil des Anlegens von Unterdruck an die Umhüllung ist der, dass in den Bereichen außerhalb des Faserhalbzeugs, wo also nur die Lagen der Umhüllung aufeinanderliegen, diese fest und sozusagen dicht aufeinanderliegen. So kann kein Matrixsystem in sie gelangen, und damit steht sämtliches Matrixsystem zum Tränken des Faserhalbzeugs zur Verfügung. Des Weiteren kann durch das Anlegen von Unterdruck die Position des Faserhalbzeugs in der Umhüllung fixiert werden, und es sind keine weiteren aufwendigen Hilfsmittel nötig.

Vorteilhaft wird an dem zweiten Endbereich der Unterdruck angelegt bzw. die Luft abgesaugt. Sowohl das flüssige Matrixsystem als auch Faserhalbzeug sollten davor in die Umhüllung eingebracht worden sein. Spätestens danach und vor einem Absaugen kann und sollte die Umhüllung in diesem zweiten Endbereich verschlossen und abgedichtet worden sein. Zum Einbringen des flüssigen Matrixsystems kann vorgesehen sein, eine an sich bereits verschlossene Umhüllung noch einmal an einer Lage, vorteilhaft an einer oberen Lage, auf einer gewissen Breite aufzuschneiden, beispielsweise mit einem Messer bzw. mit einer Klinge. Nach dem Einbringen des Matrixsystems kann dieser Schnitt wieder verschlossen werden, beispielsweise mittels entsprechend geeignetem Klebeband odgl.. Dabei können ein Absauganschluss bzw. ein vorgenanntes Absaugventil bereits vorhanden sein oder noch angebracht werden. Dabei kann zu Beginn des Absaugens am zweiten Endbereich die Umhüllung insgesamt dicht verschlossen sein, also auch am ersten Endbereich. Dazu kann es empfehlenswert sein, das flüssige Matrixsystem an dem ersten Endbereich in die Umhüllung einzubringen, die dort noch zumindest teilweise oder vollständig offen ist, beispielsweise wenn die Umhüllung vor dem Verschließen ein langer Schlauch mit gleichbleibendem Querschnitt und offenen Enden ist. Dabei kann das flüssige Matrixsystem in einen Bereich zwischen dem ersten Endbereich und dem Faserhalbzeug eingebracht werden. Durch das Einbringen des Faserhalbzeugs am gegenüberliegenden zweiten Endbereich kann der jeweilige Vorgang sehr gut und vor allem unabhängig voneinander erfolgen. Insbesondere muss jeweils nicht zu weit in die Umhüllung hineingereicht werden, was sowohl für das Faserhalbzeug aber auch vor allem für das Einbringen des flüssigen Matrixsystems von Vorteil ist. Das Einbringen sowohl des Faserhalbzeugs als auch des flüssigen Matrixsystems kann jedoch auf an sich bekannte Art und Weise erfolgen.

Das flüssige Matrixsystem kann beispielsweise mit einem länglichen Rohr oder Schlauch in die Umhüllung eingebracht werden, die zumindest teilweise in die Umhüllung hineingeführt werden. In vorteilhafter Ausgestaltung der Erfindung reicht es, wenn das flüssige Matrixsystem auf einmal in einem Bereich aufgebracht wird. Dabei sollte dies mit einer Breite erfolgen, die geringer als die Breite des Faserhalbzeugs ist, besonders vorteilhaft sollte die Breite aber nicht geringer sein als 10 % bis 30 % des Faserhalbzeugs. Somit kann bei einem Faserhalbzeug, der in Laufrichtung gesehen sehr breit ist, an mindestens zwei Bereichen nebeneinander flüssiges Matrixsystem eingebracht werden, also sozusagen bereits etwas verteilt eingebracht werden.

In vorteilhafter Ausgestaltung erfolgt das Zusammendrücken nicht nur über die Breite des Faserhalbzeugs bzw. der Umhüllung in Richtung senkrecht zur Laufrichtung, sondern wird streifenartig oder linienartig durchgeführt. So kann sichergestellt werden, dass sich der Druck des Zusammendrückens auf das vollständige Faserhalbzeug sowie sämtliches flüssige Matrixsystem auswirkt. Besonders vorteilhaft wird eine Zusammendrückwalze für das Zusammendrücken verwendet. Diese kann rotieren und so quasi über die Umhüllung hinwegrollen und muss nicht darüber schleifen oder darüber gezogen werden. Dies kann Beschädigungen vermeiden helfen. Des Weiteren kann vorgesehen sein, dass entweder die Umhüllung samt Faserhalbzeug stationär bleibt während des Zusammendrückens, und das Zusammendrücken bzw. eine genannte rotierende Zusammendrückwalze darüber bewegt werden. Alternativ kann das Zusammendrücken sozusagen stationär erfolgen und die Umhüllung hindurchgezogen werden. So kann insbesondere eine rotierende Zusammendrückwalze wie in einer Art Presswerk odgl. die Umhüllung hindurchziehen, möglicherweise auch vergleichbar mit einer Wäschemangel, bei der ja auch flüssiges Matrixsystem aus einem Textil entfernt werden soll.

Bei der Erfindung erfolgt in Laufrichtung vor dem Zusammendrücken, also auch zeitlich etwas davor, ein zusätzliches Vor-Zusammendrücken. Dieses wird auch über die gesamte Breite des Faserhalbzeugs bzw. der Umhüllung durchgeführt. Ähnlich wie das Zusammendrücken wird auch das Vor-Zusammendrücken durchgehend und lückenlos erfolgen. Ein Abstand zwischen dem Vor-Zusammendrücken und dem Zusammendrücken kann bei einigen Zentimetern liegen, vorteilhaft 2 cm bis 10 cm. Um dieses Maß sollte das Vor-Zusammendrücken also dem Zusammendrücken vorauslaufen.

Es kann vorgesehen sein, dass auch das Vor-Zusammendrücken, ähnlich wie das vorbeschriebene Zusammendrücken, streifenartig oder linienartig durchgeführt wird. Es sollte eben auch mindestens so breit wie das Zusammendrücken erfolgen, bevorzugt mindestens über die gesamte Umhüllung gehen. Es sollte des Weiteren auch in einer Richtung senkrecht zur Laufrichtung erfolgen bzw. parallel zum Zusammendrücken. Für das Vor-Zusammendrücken kann eine ähnliche Vorrichtung vorgesehen sein wie für das Zusammendrücken, möglicherweise also auch eine rotierende Walze. Alternativ können auch ein einfaches Profil oder ein einfacher Stab ausreichen, die dann auch nicht zwingend rotieren müssen.

Vorteilhaft wird das Vor-Zusammendrücken weniger stark durchgeführt als das Zusammendrücken selbst. Das Vor-Zusammendrücken hat hauptsächlich den Zweck, dass sich das flüssige Matrixsystem, die sozusagen durch das Zusammendrücken vor sich hergeschoben wird, nicht zu weit von dem Zusammendrücken entfernt und dann möglicherweise nur in einem Mittelbereich vorhanden ist bzw. sich von dem ursprünglichen Ort des Einbringens des flüssigen Matrixsystems in die Umhüllung in Laufrichtung erstreckt. Schließlich soll das Faserhalbzeug, falls dies gewünscht ist, über seine gesamte Breite hinweg vollständig und möglichst gleichmäßig mit dem flüssigen Matrixsystem durchtränkt werden, so dass stets eine ausreichende Menge an flüssigem Matrixsystem vorhanden sein sollte bzw. sozusagen vor dem Zusammendrücken hergeschoben wird. Das Vor-Zusammendrücken ist aber nicht dazu vorgesehen, das flüssige Matrixsystem in das Faserhalbzeug hineinzudrücken oder wieder herauszudrücken, um überschüssiges Matrixsystem sozusagen entfernen zu können. Deswegen kann ein Druck für das Vor-Zusammendrücken zwischen 5 % und 70 % des Drucks für das Zusammendrücken betragen. Alternativ oder zusätzlich kann auch ein Abstand des Vor-Zusammendrückens, beispielsweise zwischen der vorgenannten Vor-Zusammendrückwalze und einer genannten Auflage odgl., größer sein. Ein Abstand kann beispielsweise so groß sein wie das lockere Faserhalbzeug plus die Höhe bzw. Dicke der Umhüllung, so dass an sich kein permanenter Druck aufgebracht werden muss.

In weiterer Ausgestaltung der Erfindung sollte das Zusammendrücken so weit über das Faserhalbzeug bzw. die Umhüllung hinweg durchgeführt werden, dass die Umhüllung gegen das Faserhalbzeug von beiden gegenüberliegenden Seiten gedrückt wird. Dies kann vorteilhaft mit zwei gegenüberliegenden Zusammendrückwalzen erfolgen oder mittels einer einzigen Zusammendrückwalze und einer gegenüberliegenden Auflage, auf der sich die Umhüllung befindet bzw. auf der sie aufliegt. Entsprechendes kann auch für das Vor-Zusammendrücken gelten.

In Weiterbildung der Erfindung beginnen das Zusammendrücken und/oder das Vor-Zusammendrücken an einem Bereich der Umhüllung, in dem auch das Faserhalbzeug ist, an dem sich kein flüssiges Matrixsystem befindet. Besonders vorteilhaft befindet sich das flüssige Matrixsystem zu Beginn des Vor-Zusammendrückens und des Zusammendrückens zwischen den beiden, so dass also auf einer Seite des flüssigen Matrixsystems hin zum zweiten Endbereich das Vor-Zusammendrücken beginnt, und auf der anderen Seite des flüssigen Matrixsystems hin zum ersten Endbereich das Zusammendrücken selbst beginnt. Das Zusammendrücken und das Vor-Zusammendrücken können allgemein gleichzeitig beginnen. Es ist auch möglich, dass das Vor-Zusammendrücken vor dem Zusammendrücken beginnt, um vermeiden zu können, dass sich das flüssige Matrixsystem durch das Zusammendrücken bereits zu weit entfernt hat hin zum zweiten Endbereich, dass sie nicht mehr zwischen den beiden Drücken verläuft.

Die Menge an flüssigem Matrixsystem, die sozusagen durch das Zusammendrücken entlang der Laufrichtung durch die Umhüllung bzw. über das Faserhalbzeug hinweg bewegt wird, nimmt entlang dieser Laufrichtung ab. Schließlich verbleibt ein Teil des flüssigen Matrixsystems in dem Faserhalbzeug. Umso wichtiger wird dann aber in der vorgenannten Ausgestaltung der Erfindung, dass das flüssige Matrixsystem durch das Zusammendrücken, besonders vorteilhaft unterstützt durch das Vor-Zusammendrücken, über die Breite des Faserhalbzeugs bzw. der Umhüllung hinweg verteilt wird. Damit das Problem von zu weit vorauseilendem flüssigen Matrixsystem, welches durch das Vor-Zusammendrücken vermieden werden soll, nicht zu groß wird, sollte eben ein Abstand zwischen dem Zusammendrücken und dem Vor-Zusammendrücken, der entlang der Laufrichtung gemessen wird, während des Verfahrens nicht größer werden. Unter Umständen kann sogar vorgesehen sein, dass sich dieser Abstand verringert, beispielsweise linear. Dabei sollte darauf geachtet werden, dass ein Abstand von mindestens 1 cm so lange eingehalten wird, bis das Zusammendrücken über das Faserhalbzeug hinweg erfolgt ist und das gesamte Faserhalbzeug mit flüssigem Matrixsystem in gewünschtem Maß getränkt ist.

Allgemein kann der genannte Abstand zwischen Zusammendrücken und Vor-Zusammendrücken maximal 20 cm bzw. maximal 20 % der Länge des Faserhalbzeugs in Laufrichtung betragen. Vorteilhaft liegt er zwischen 3 cm und 10 cm bzw. zwischen 3 % und 15 % der Länge des Faserhalbzeugs. Der Abstand kann in Ausgestaltung der Erfindung verändert werden bzw. veränderbar sein und an die Fluidmenge angepasst werden. So kann er sich somit während des Verfahrens ändern. Durch die geeignete Manipulation kann ein definierter bzw. gewünschter Druck im Flüssigkeitsreservoir eingestellt werden. Vorteilhaft verringert sich der Abstand mit fortschreitendem Tränken bzw. mit fortschreitendem Durchführen des Zusammendrückens über das Faserhalbzeug, da auch die Menge an flüssigem Matrixsystem im Flüssigkeitsreservoir abnimmt.

In bevorzugter Ausgestaltung der Erfindung kann vorgesehen sein, dass das Vor-Zusammendrücken nicht oberhalb des Faserhalbzeugs erfolgt, sondern sozusagen davor bzw. hin zum ersten Endbereich der Umhüllung. Ein Abstand zwischen dem Vor-Zusammendrücken und dem vorderen Ende des Faserhalbzeugs kann zwischen 1 cm und 10 cm bzw. nur 5 cm liegen bzw. zwischen 2 % und 20 %, vorzugsweise zwischen 4 % und 10 %, der Länge des Faserhalbzeugs liegen. Für die Reihenfolge zwischen Zusammendrücken und Vor-Zusammendrücken wird auf die vorstehenden Ausführungen verwiesen.

Allgemein kann vorgesehen sein, dass das Verfahren im kontinuierlichen Durchlauf durchgeführt wird mit kontinuierlichem seitlichem Verschließen von zwei Folienlagen als seitlich geschlossene Umhüllung. Darin werden ein sehr langer oder sogar ein quasi Endlos- Faserhalbzeug eingebracht. Das Zuführen von Matrixsystem bzw. Flüssigharz oder allgemein Flüssigkeit kann kontinuierlich erfolgen, ebenso wie das Zusammendrücken kontinuierlich erfolgen kann. Mittels mindestens einer Abdrückwalze kann nach vorne zu bzw. entgegen einer Laufrichtung des Verfahrens die Umhüllung abgeschlossen bzw. verschlossen werden, und in dem dadurch gebildeten Bereich kann der erfindungsgemäße Unterdruck angelegt werden. Dafür kann eine Leitung von vorne in die Umhüllung eingebracht werden. Durch eine Nut odgl. kann eine Abdichtung gegen über der vorgenannten Abdrückwalze erfolgen. Auf ähnliche Weise kann eine Leitung für das Zuführen von Matrixsystem an der Abdrückwalze vorbei und gegenüber dieser abgedichtet geführt sein. So können erfindungsgemäß große Mengen bzw. kann eine große Länge an Faserhalbzeug oder Fasergelege bzw. Faserverbund getränkt werden.

Eine erfindungsgemäße Vorrichtung, mit der das vorgenannte Verfahren durchgeführt werden kann, weist eine ebene bzw. eine flächige Auflage für die Umhüllung auf. Diese kann wie eingangs beschrieben plan oder auch profiliert ausgebildet sein, insbesondere nach unten vertieft oder profiliert sein. Weitere Ausführungsmöglichkeiten sind vorstehend beschrieben worden. Des Weiteren sind Mittel zum Einbringen des flüssigen Matrixsystems in die Umhüllung vorgesehen, vorteilhaft mit einem länglichen Rohr oder Schlauch. Bevorzugt weist die Vorrichtung selbst auch Mittel auf, mit denen die Umhüllung verschlossen werden kann. Dies sind vorteilhaft Mittel zum Verschweißen der Umhüllung, wenn diese aus Kunststoff besteht, beispielsweise Folie. Die Vorrichtung weist Mittel zum Absaugen von Luft aus der Umhüllung auf, vorteilhaft ebenfalls mit einem an sich bekannten Absaugschlauch und gegebenenfalls einem in die Umhüllung eingebrachten Ventil bzw. Rückschlagventil. Es sind Mittel zum Zusammendrücken der Umhüllung vorhanden, wie sie vorstehend im Detail beschrieben worden sind, insbesondere als Zusammendrückwalze ausgebildet. Des Weiteren sind noch Mittel vorhanden, um eine Relativbewegung entlang der Laufrichtung zwischen der Umhüllung und den Mitteln zum Zusammendrücken der Umhüllung zu erzeugen. Dies ist vorteilhaft eine Art Verfahreinrichtung, wie sie aber an sich auch aus dem Stand der Technik bekannt ist. So kann beispielsweise durch zwei gegenüberliegend angeordnete Zusammendrückwalzen die Umhüllung durch sie hindurchgezogen werden und somit eben die genannte Relativbewegung erzeugt werden. Somit kann die Auflage für die Umhüllung auch durch eine weitere Zusammendrückwalze bzw. durch eine Gegen-Zusammendrückwalze ergänzt oder ersetzt werden.

Insgesamt kann das Verfahren auch mit einer Laufrichtung durchgeführt werden, die nicht in einer horizontalen Ebene verläuft, sondern schräg bzw. möglicherweise sogar senkrecht verläuft. So kann das Durchführen des Verfahrens auch beeinflusst werden, insbesondere was die Anordnung des flüssigen Matrixsystems in einem Bereich vor dem Zusammendrücken betrifft. Dabei kann beispielsweise auch vorgesehen sein, dass das Verfahren bei im Wesentlichen ebener Laufrichtung beginnt, und dann erst mit zunehmendem Fortschritt, insbesondere sobald das flüssige Matrixsystem an das Faserhalbzeug gekommen ist, das Verfahren schräg oder senkrecht durchgeführt wird, also das Faserhalbzeug nicht mehr horizontal verläuft, sondern schräg oder senkrecht. Dann ist aufgrund der Adhäsionskräfte das Faserhalbzeug mittels des flüssigen Matrixsystems sozusagen in der Umhüllung fixiert und kann nicht ungewünscht verrutschen bzw. nach unten rutschen. Dazu kann die Auflage gekippt werden oder nach oben gebogen ausgebildet sein.

Werden für das Zusammendrücken eine über der Umhüllung angeordnete Zusammendrückwalze und eine darunter angeordnete Gegen-Zusammendrückwalze verwendet, so entsteht zwischen ihnen ein Nipp. In diesem Nipp verläuft die Umhüllung ggf. mit dem Faserhalbzeug darin. Der Nipp bzw. Abstand kann dabei derart eingestellt werden, dass er an einer vorgegebenen Stelle so groß ist wie die Dicke des Faserhalbzeugs, wenn sie in gewünschtem Maß mit flüssigem Matrixsystem getränkt ist bzw. ein Teil des flüssigen Matrixsystems wieder herausgedrückt worden ist. Dabei wird hierzu noch die Dicke der Umhüllung addiert.

Für die Walzen kann vorgesehen sein, dass sie entweder aus relativ harten bzw. nicht-nachgiebigen Materialien gefertigt sind, beispielsweise aus hartem Kunststoff oder Stahl. Alternativ können sie in bestimmten Bereichen oder vollflächig aus elastischen Materialien wie beispielsweise Gummi, geschäumten Materialien odgl., hergestellt sein. Dies kann für eine zusammengedrückt Walze bzw. deren gegen-zusammengedrückt Walze gelten, alternativ oder zusätzlich auch für ein Vor-Zusammendrückprofil bzw. ein Gegen-Vor-Zusammendrückprofil.

Das Vor-Zusammendrücken kann mittels eines vorgenannten Vor-Zusammendrückprofils odgl. von oben auf die Umhüllung erfolgen. Als Gegenanlage kann entweder die vorgenannte flächige oder plane Auflage für die Umhüllung verwendet werden, alternativ ein unterhalb der Umhüllung angeordnetes Gegen-Vor-Zusammendrückprofil. Diese können aber, wie zuvor erläutert worden ist, relativ einfach ausgebildet sein und müssen nicht zueinander bewegbar oder angetrieben drehend oder überhaupt drehbar ausgebildet sein.

Das erfindungsgemäße Verfahren kann, insbesondere wenn die Ausgestaltung mit dem Anlegen von Unterdruck durchgeführt wird, auch für höherviskose Matrixsysteme/Flüssigkeiten verwendet werden. Typisch sind für derartige Verfahren zum Tränken eines Faserhalbzeugs mit einem flüssigen Matrixsystem, die auch VARI-Verfahren genannt werden, Viskositäten von etwa 350 mPas (bei Raumtemperatur). Mit einem erfindungsgemäßen Verfahren können Matrixsysteme mit einer Viskosität bis zu 1100 mPas (bei Raumtemperatur) verwendet werden. So ist die Verwendung auch von deutlich höherviskosen Matrixsystemen möglich.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
Fig. 1 eine Seitenansicht einer erfindungsgemäßen Vorrichtung, um das Verfahren durchzuführen, wobei ein Schlauch als Umhüllung an den Endbereichen noch offen ist,
Fig. 2 die Vorrichtung aus Fig. 1 nach begonnenem Verfahren, bei dem bereits ein Teil eines Faserhalbzeug in dem Schlauch mit einem flüssigen Matrixsystem getränkt worden ist,
Fig. 3 eine Schrägansicht auf eine etwas anders ausgestaltete Vorrichtung mit einem Zusammendrücken von oben und von unten,
Fig. 4 eine vergrößerte Detaildarstellung aus Fig. 3 im Bereich des Zusammendrückens und
Fig. 5 ein rechter Endbereich des Schlauchs mit Absaugventil und Absaugschlauch sowie Fließhilfe,
Fig. 6 und 7 eine Abwandlung einer erfindungsgemäßen Vorrichtung mit einem anders ausgestalteten Profil zum vor-Zusammendrücken zu Beginn des Verfahrens und am Ende des Verfahrens,
Fig. 8 und 9 eine weitere Abwandlung einer erfindungsgemäßen Vorrichtung mit einem Verdrängungskörper in der Blase von Matrixsystem zu Beginn des Verfahrens und am Ende des Verfahrens,
Fig. 10 eine weitere Abwandlung eines erfindungsgemäßen Verfahrens mit Aufrollen des Schlauchs am Ende zum Zusammendrücken,
Fig. 11 eine weitere Abwandlung eines erfindungsgemäßen Verfahrens mit zunehmend schräger Führung des Schlauchs,
Fig. 12 eine Abwandlung eines erfindungsgemäßen Verfahrens entsprechend Fig. 11 mit senkrechter Führung des Schlauchs,
Fig. 13eine Seitenansicht einer erfindungsgemäßen Vorrichtung zum kontinuierlichen Durchführen des Verfahrens und
Fig. 14 eine Draufsicht auf die Vorrichtung aus Fig. 13.

### Detaillierte Beschreibung der Ausführungsbeispiele

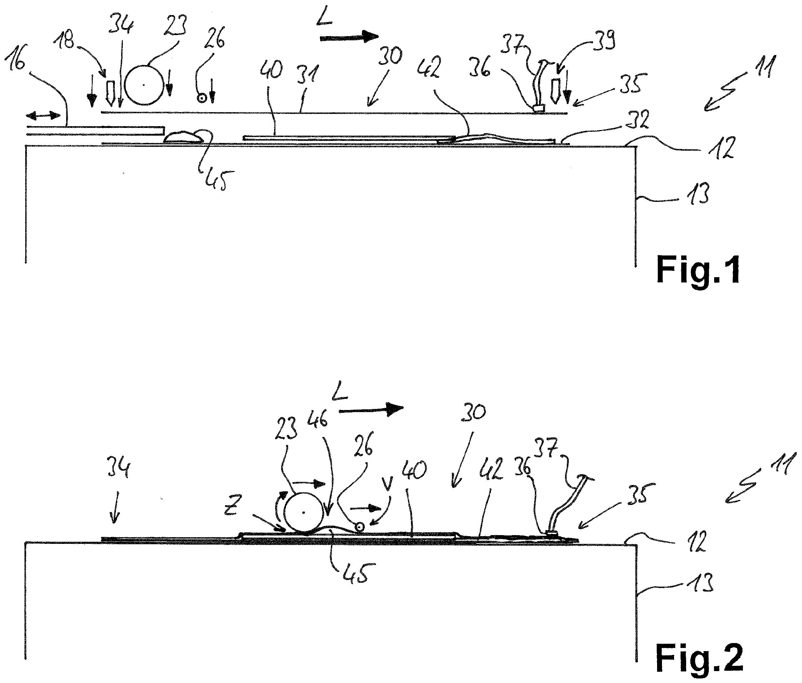

In der Fig. 1 ist eine erfindungsgemäße Vorrichtung 11 in der Seitenansicht dargestellt, mit der das erfindungsgemäße Verfahren durchgeführt werden kann, wie im Folgenden aus der Zusammenschau der Fig. 1 und 2 klar wird. Die Vorrichtung 11 weist eine Auflage 12 auf, die eben und plan sein kann, hier als Oberseite eines Arbeitstischs 13 odgl.. Auf dieser Auflage 12 ist ein Schlauch 30 aufgelegt, der aus einer oberen Lage 31 und einer unteren Lage 32 besteht. An den Längsseiten sind die beiden Lagen 31 und 32 verschlossen, ein linker erster Endbereich 34 und ein rechter zweiter Endbereich 35 sind dagegen offen, und so wird die vorgenannte Umhüllung gebildet. Der Schlauch 30 besteht vorteilhaft aus dünner Kunststofffolie, beispielsweise Verbundfolie mit PE/Polyamid. Er kann durch Aufeinanderfalten und Verschweißen längs einer Längsseite hergestellt sein. Vorteilhaft ist er im Wesentlichen durchsichtig, um darin stattfindende Vorgänge besser beobachten und kontrollieren zu können. In die Folie können durch lokale Prägungen sogenannten Luftfließhilfen eingebracht werden, sodass die Prägungen an den Innenseiten des Schlauchs 30 leicht nach innen überstehen. So werden dünne Luftkanäle gebildet, wenn die beiden Lagen 31 und 32 des Schlauchs 30 aufeinanderliegen, wodurch ein vollständiges Absaugen von Luft besser und leichter möglich ist. Das flüssige Matrixsystem bzw. ein entsprechendes Flüssigharz odgl. können durch diese dünnen Luftkanäle nicht fließen.

Der Schlauch 30 kann ein fertiger Schlauch sein, denn nur an den Enden offen ist. Alternativ können zwei separate Folien bzw. die untere Lage 32 und die obere Lage 31 übereinander gelegt werden und längs miteinander verschweißt werden, was leicht möglich ist. Dabei kann nach dem Auflegen der unteren Lage 32 auf die Auflage 12 ein Faserhalbzeug aufgelegt werden, auf welches dann wiederum die obere Lage 31 gelegt wird. Dann wird verschweißt, so ist das Einbringen des Faserhalbzeugs in den so gebildeten Schlauch 30 sehr leicht möglich.

Im zweiten Endbereich 35 ist in der oberen Lage 31 ein Absaugventil 36 angebracht, ausgebildet als Einwegventil bzw. als Rückschlagventil. Des Weiteren kann das Absaugventil 36 auch eine Membran enthalten und somit semipermeabel sein, wobei die Membran ein Zurückströmen von Luft in den Schlauch 30 verhindert. Dies ermöglicht es, dass Luft durch das Absaugventil 36 abgesaugt werden kann, das flüssige Matrixsystem aber nicht. Somit kann diese Membran für das flüssige Matrixsystem undurchlässig sein. So kann eine Verunreinigung einer Absaugpumpe vermieden werden. Mittels eines davon abgehenden Absaugschlauchs 37 kann Luft aus dem Inneren der Schlauchs 30 abgesaugt werden. Das Absaugventil 36 verschließt dann selbstständig und selbsttätig, so dass nicht zwingend permanent Unterdruck angelegt werden muss. Einerseits ist es möglich, dass ein einziges Absaugventil 36 vorgesehen ist. Andererseits können auch mehrere Absaugventile vorgesehen sein bzw. kann an mehreren Punkten abgesaugt werden.

In der Fig. 1 ist bei weit beabstandeter oberer Lage 31 und unterer Lage 32 zu erkennen, wie ein flaches und flächiges Faserhalbzeug 40 eingelegt ist, beispielsweise aus Glasfasern, alternativ aus Carbonfasern oder Naturfasern wie Flachs, Hanf, Sisal oder Kenaf. Das Faserhalbzeug kann auch aus mehreren separaten bzw. einzelnen Lagen von Fasern bestehen. Diese können nach dem Tränken mit flüssigem Matrixsystem entweder aufeinander verbleiben und gemeinsam ein Bauteil bilden. Alternativ können sie auch voneinander getrennt werden und separat voneinander weiter verarbeitet werden. Bei der Verwendung von vorgenannten Naturfasern ist zu beachten, dass diese teilweise hohl sind und somit auch in einem Hohlraum zusätzliches Matrixsystem bzw. Flüssigharz odgl. aufnehmen können. Dadurch steigt aber insgesamt der Anteil an Matrixsystem, was als negativ angesehen wird. Bei solchen Naturfasern kann es also besonders vorteilhaft sein, durch das Aufbringen von zusätzlichem Druck wieder etwas Flüssigkeit sozusagen herauszudrücken.

Es ist zu erkennen, dass das Faserhalbzeug 40 in Laufrichtung L für das später stattfindende Verfahren nur etwa halb so lang ist wie der Schlauch 30 als erfindungsgemäße Umhüllung bzw. deutlich kürzer ist. An sich reicht ein Überstand des Schlauchs 30 über das Faserhalbzeug 40 von 20 cm auf beiden Seiten. Die Laufrichtung L verläuft vom linken ersten Endbereich 34 bis zum rechten zweiten Endbereich 35. Das Faserhalbzeug 40 kann gewoben, gelegt, geflochten odgl. sein. Unter seinem rechten Endbereich befindet sich ein Streifen einer bekanntermaßen ausgebildeten Fließhilfe 42, der einige Zentimeter unter das Faserhalbzeug 40 reichen sollte. Gleichzeitig sollte er auch nach rechts in Laufrichtung L einige Zentimeter darüber hinausragen. Die Fließhilfe 42 kann vorteilhaft bis zum Absaugventil 36 verlaufen.

Links neben bzw. in Laufrichtung L vor dem Faserhalbzeug 40 befindet sich eine gewisse Menge an flüssigen Matrixsystem 45, das vorteilhaft ein Flüssigharz oder ein anderes flüssiges Imprägniermittel sein kann, mit dem aus dem Faserhalbzeug 40 ein festes Bauteil gemacht werden kann. Das flüssige Matrixsystem 45 ist mittels eines Einbringrohrs 16 von links durch den offenen ersten Endbereich 34 in vorgegebener Menge eingebracht worden. Es ist bereits mit einem Härter versehen, wobei für seine Aktivierung zusätzlich noch Wärme verwendet werden kann. Als flüssiges Matrixsystem sowie als Härter kann jedes beliebige System verwendet werden, unter Umständen auch abgestimmt auf das spezielle Material des Faserhalbzeugs 40. Für das Verfahren an sich spielt dies keine Rolle. Zum Einbringen des flüssigen Matrixsystems 45 in den Schlauch 30 wird das Einbringrohr 16 von links durch den offenen ersten Endbereich 34 geführt, dann wird das flüssige Matrixsystem 45 ausgebracht, und anschließend wird das Einbringrohr 16 wieder nach links herausgezogen. Es ist zu erkennen, dass die eingebrachte Menge an flüssigem Matrixsystem 45 einen deutlichen Abstand bis zum linken Ende des Faserhalbzeugs 40 aufweist. Dieser Abstand kann hier beispielsweise 5 cm bis 20 cm betragen. In der Praxis wird sich spätestens nach dem Herausziehen des Einbringrohrs 16 die obere Lage 31 des Schlauchs 30 auf die untere Lage 32 legen bzw. auf das flüssige Matrixsystem 45 und das Faserhalbzeug 40 sowie die Fließhilfe 42. Dies wird natürlich noch stärker, sobald die Luft aus dem Schlauch 30 abgesaugt wird.

Entweder vor oder nach dem Einbringen des flüssigen Matrixsystems 45 in den Schlauch 30 ist das Faserhalbzeug 40 eingebracht worden, möglicherweise auch gleichzeitig damit. Dies kann vorteilhaft von rechts durch den nach rechts offenen zweiten Endbereich 35 erfolgen, entweder manuell oder mit einer entsprechenden Maschine bzw. einem Roboter. Vorteilhaft danach wird danach oder davor die Fließhilfe 42 eingebracht, und zwar etwas unter das rechte Ende des Faserhalbzeugs 40 geschoben. Alternativ könnte die Fließhilfe 42 auf das rechte Ende des Faserhalbzeugs 40 aufgelegt werden, was leichter durchzuführen wäre.

In einem nächsten Schritt wird im linken Endbereich 34 ein erster Trennschweißer 18 von oben auf den Schlauch 30 gedrückt mit einer Bewegungsrichtung entsprechend dem senkrechten Pfeil. Der erste Trennschweißer 18 drückt die obere Lage 31 des Schlauchs 30 gegen die untere Lage 32, und diese beiden werden dann mit Wärme verschweißt. Möglicherweise kann auch ein überstehendes Ende des Schlauchs 30 abgetrennt werden. Damit wird der erste Endbereich 34 luftdicht und flüssigkeitsdicht verschlossen.

Im rechten zweiten Endbereich 35 wird ähnlich vorgegangen, wobei dies zeitlich gleichzeitig erfolgen kann oder ein Endbereich nach dem anderen. Hier wird von oben ein zweiter Trennschweißer 19 herangeführt, der den Schlauch 30 als Umhüllung auch im zweiten Endbereich 35 flüssigkeitsdicht und luftdicht verschließt. Somit ist der gesamte Schlauch 30 samt Faserhalbzeug 40, Fließhilfe 42 und flüssigem Matrixsystem 45 darin verschlossen.

Da sich erwartungsgemäß noch Luft in dem Schlauch 30 befindet, wird mittels des Absaugschlauchs 37 durch das Absaugventil 36 diese Luft abgesaugt, vorteilhaft mittels einer angeschlossenen Vakuumpumpe. Durch den Druck, der infolgedessen von oben auf den Schlauch 30 und somit vor allem auch auf die Blase 46 mit dem flüssigen Matrixsystem 45 zwischen den Lagen 31 und 32 wirkt, wird sich das flüssige Matrixsystem 45 flächig ausbreiten. Da dieses flächige Ausbreiten aber mit der Erfindung ja besonders gut kontrolliert werden soll, werden gleichzeitig, wie durch die senkrechten Pfeile gezeigt ist, von oben eine Zusammendrückwalze 23 und ein Vor-Zusammendrückprofil 26 heruntergefahren. Sie drücken sozusagen von oben auf den Schlauch 30 samt Inhalt. Ein Druck bzw. ein Zusammendrücken Z an der Zusammendrückwalze 23 kann dabei so groß sein wie eingangs erläutert, beispielsweise mindestens 0,1 N/cm² bzw. mindestens 0,5 N/cm² und bis zu 10 N/cm² betragen. Auf die Länge bezogen kann dies bei einer Länge der Zusammendrückwalze 23 zwischen 0,5 m und 1 m ein Druck von 0,1 N/cm bis zu 10 N/cm sein. Alternativ zum Einstellen eines bestimmten Drucks kann auf einen bestimmten geometrischen Wert gefahren werden, beispielsweise ein Abstand der Zusammendrückwalze 23 zur Auflage 12 von 1 mm bis 10 mm eingestellt werden. Dies kann auch an die jeweiligen Eigenschaften des Faserhalbzeugs 40 und des flüssigen Matrixsystems 45 angepasst werden. Durch diesen eingestellten bzw. sich ergebenden Druck des Zusammendrückens Z, der anhand der Fig. 2 leicht vorstellbar ist, wird auch sichergestellt, dass das flüssige Matrixsystem 45 auf keinen Fall entgegen der Laufrichtung L nach links von der Zusammendrückwalze 23 bzw. vor die Zusammendrückwalze 23 gelangen kann.

Das Vor-Zusammendrückprofil 26 wird zwar auch nach unten herangeführt, drückt aber signifikant weniger stark auf den Schlauch 30 bzw. nach unten. Ein Druck bzw. ein Vor-Zusammendrücken V kann beispielsweise 5 % bis 70 % des Drucks des Zusammendrückens Z mittels der Zusammendrückwalze 23 betragen. So kann insgesamt das Vor-Zusammendrückprofil 26 nur mit einer Kraft von 0,01 N/cm bis zu 1 N/cm auf eine Länge zwischen 0,5 m und 1 m bezogen nach unten drücken. Beispielsweise kann es auch einfach nur durch sein Gewicht auf dem Schlauch 30 aufliegen oder einen konstanten Spalt aufweisen.

Sobald die Zusammendrückwalze 23 nach unten drückt und den Schlauch 30 samt Inhalt zusammendrückt und auch das Vor-Zusammendrückprofil 26 nach unten gefahren ist, werden Zusammendrückwalze 23 und Vor-Zusammendrückprofil 26 gemeinsam, vorteilhaft mit gleichbleibendem Abstand, entlang der Laufrichtung L über den Schlauch 30 samt Inhalt bewegt. Alternativ könnten sie auch feststehend bleiben, während sozusagen der Arbeitstisch 13 darunter entgegen der Laufrichtung L bewegt wird. Wichtig ist eben die Relativbewegung zwischen den beiden. Dann drücken Zusammendrückwalze 23 und Vor-Zusammendrückprofil 26, wie die Fig. 2 leicht erkennbar zeigt, die sich bildende Blase 46 mit flüssigem Matrixsystem 45 darin vor sich her, und zwar über die gesamte Breite des Faserhalbzeugs 40 und des Schlauchs 30 hinweg. Dies geht nur bei anliegendem Unterdruck. Über diese Breite gesehen ist die Blase 46 als Flüssigkeitsreservoir in etwa gleich groß, so dass ein konstantes Tränken des Faserhalbzeugs 40 mittels flüssigem Matrixsystem 45 von oben erfolgt. Dieses Tränken des Faserhalbzeugs 40 wird dadurch stark unterstützt, dass die Zusammendrückwalze 23 das flüssige Matrixsystem 45 sozusagen von oben nach unten in das Faserhalbzeug 40 hinein drückt.

Durch Variieren bzw. Einstellen des Drucks der Zusammendrückwalze 23 in Dickenrichtung, was vorteilhaft während des gesamten Verfahrens gleich bleiben sollte, kann nicht nur das Matrixsystem 45 in das Faserhalbzeug 40 sozusagen hineingedrückt werden, wodurch ein möglichst gutes Tränken bewirkt wird. Des Weiteren kann, wie eingangs erläutert worden ist, die Zusammendrückwalze 23 auch ähnlich wie bei einer Wäschemangel das flüssige Matrixsystem 45 aus damit vollgesaugtem Faserhalbzeug 40 wieder herausdrücken und sozusagen zu der Blase 46 gehörend vor sich herschieben. Damit kann erreicht werden, dass das Faserhalbzeug 40 mit nicht zu viel Matrixsystem 45 getränkt ist, damit der Faseranteil möglichst hoch ist. So können eine Menge an Matrixsystem 45 eingespart und eine Festigkeit oder sonstige gewünschte Materialeigenschaften für ein fertiges faserverstärktes Bauteil verbessert werden. Ein vorgenannter Druck für das Zusammendrücken Z kann dann auch entsprechend höher eingestellt werden. Durch den angelegten Unterdruck sowie vor allem auch durch den Druck von der Zusammendrückwalze 23 wird sichergestellt, dass nicht nachträglich wieder mehr flüssiges Matrixsystem 45 in das Faserhalbzeug 40 links von bzw. vor der Zusammendrückwalze 23 gelangen kann.

Das Verfahren wird so lange durchgeführt, bis die Zusammendrückwalze 23 das in Form der Blase 46 vorhandene flüssige Matrixsystem 45 entlang der Laufrichtung L einmal über das gesamte Faserhalbzeug 40 hinweg geschoben bzw. verteilt hat. Möglicherweise kann das Verfahren für spezielle Anwendungen auch schon früher beendet werden, so dass in Richtung hin zum rechten zweiten Endbereich 35 des Schlauchs 30 ein Teil des Faserhalbzeugs nicht mit flüssigem Matrixsystem 45 getränkt ist. Dies wird aber ein Sonderfall bleiben.

Abweichend von einer genannten planen und ebenen Oberseite der Auflage 12 des Arbeitstischs 13 kann diese auch eine gewisse Profilierung aufweisen. Diese kann dazu dienen, dass bei einer rundzylindrischen und geraden Zusammendrückwalze 23 der Gegendruck, der durch die Auflage 12 gebildet wird, variiert und somit auch das gesamte Zusammendrücken Z variiert. So kann erreicht werden, dass auf die Breite gezogen manche Breitenbereiche des Faserhalbzeugs 40 mit mehr und manche Breitenbereiche mit weniger flüssigem Matrixsystem 45 durchtränkt sind. Anstelle einer Profilierung der Oberseite der Auflage können auch die Zusammendrückwalze 23 und/oder das Vor-Zusammendrückprofil 26 profiliert sein. Sie können beispielsweise eine Durchmesserverringerung in dem Bereich aufweisen, in dem über das Faserhalbzeug 40 gefahren wird. Gerade wenn das Vor-Zusammendrückprofil 26 nicht rotiert bzw. sich nicht dreht kann es auch derart leicht nach oben gebogen sein, dass es über dem Faserhalbzeug 40 weiter nach oben steht als in einem Bereich daneben. So kann vorgesehen sein, dass ein Rest an flüssigem Matrixsystem nach dem Tränken minimiert ist, insbesondere weniger als 10% oder weniger als 5% der ursprünglich eingebrachten Menge beträgt.

Des Weiteren kann vorgesehen sein, dass nicht das gesamte Verfahren in der Horizontalen durchgeführt wird. So könnte der Arbeitstisch 13 bzw. die Auflage 12 beispielsweise schräggestellt werden, sobald das flüssige Matrixsystem 45 das Faserhalbzeug 40 erreicht bzw. von der Zusammendrückwalze 23 daran herangedrückt worden ist. So kann beispielsweise der rechte zweite Endbereich 35 angehoben oder abgesenkt werden relativ zum linken ersten Endbereich 34, wodurch sich die Ausbreitung des flüssigen Matrixsystems 45 in dem Faserhalbzeug 40 beeinflussen lassen kann. Ebenso ist ein seitliches Verkippen möglich mit einem ähnlichen Effekt hinsichtlich der Ausbreitung des flüssigen Matrixsystems 45 in dem Faserhalbzeug 40.

In einer alternativ ausgebildeten Vorrichtung 111, bei der derselbe Schlauch 30 wie aus den Fig. 1 und 2 mit Faserhalbzeug 40, Fließhilfe 42 und flüssigem Matrixsystem 45 darin bearbeitet wird, sind eine obere Zusammendrückwalze 123 und eine genau gegenüberliegende untere Gegen-Zusammendrückwalze 124 vorgesehen. Sie sind vorteilhaft identisch und weisen einen einstellbaren Abstand zueinander auf. Dies kann dazu dienen, gemäß dem Schritt von Fig. 1 zu Fig. 2 das Zusammendrücken Z des Schlauchs 30 samt Inhalt zu beginnen. Alternativ kann auch der an den Endbereichen 34 und 35 verschlossene Schlauch 30 samt Inhalt darin mit dem Endbereich 34 an feststehende Zusammendrückwalzen 123 und 124 herangeführt werden. Diese Zusammendrückwalzen 123 und 124 können dann rotieren, und somit ähnlich wie bei einer Wäschemangel den Schlauch 30 hindurchziehen und dabei das erfindungsgemäße Zusammendrücken Z bewirken.

In Laufrichtung L etwas vor den Zusammendrückwalzen 123 und 124 sind eine obere Vor-Zusammendrückwalze 126 und eine untere Gegen-Vor-Zusammendrückwalze 127, die als Gegenwalze fungiert, vorgesehen. Der Abstand kann ähnlich sein wie in den Fig. 1 und 2. Auch eine Beweglichkeit der Vor-Zusammendrückwalzen 126 und 127 sollte derjenigen der Zusammendrückwalzen 123 und 124 entsprechen. Hier werden also das Zusammendrücken Z und auch ein Vor-Zusammendrücken V nicht gegen eine Auflage entsprechend Fig. 1 ausgeübt, sondern gegen entsprechend ausgebildete Gegen-Walzen. Auch dadurch kann ein Abstand der Walzen, insbesondere ein sogenannter Nipp zwischen oberer Zusammendrückwalze 123 und unterer Zusammendrückwalze 124, also deren Abstand zueinander, besser bzw. genauer eingestellt werden. Dies ermöglicht unter Umständen ein noch genaueres Einstellen eines Gehalts an flüssigem Matrixsystem 45 im später durchtränkten bzw. imprägnierten Faserhalbzeug 40, also des Faservolumengehalts. Des Weiteren ist eine konstruktive Ausgestaltung möglicherweise einfacher, gerade auch nach Art einer Wäschemangel. Es muss nämlich nicht vorgesehen werden, dass gemäß den Fig. 1 und 2 die Zusammendrückwalze 23 samt Vor-Zusammendrückprofil 26 entlang der Laufrichtung L über den Schlauch 30 samt Inhalt hinweg bewegt werden kann.

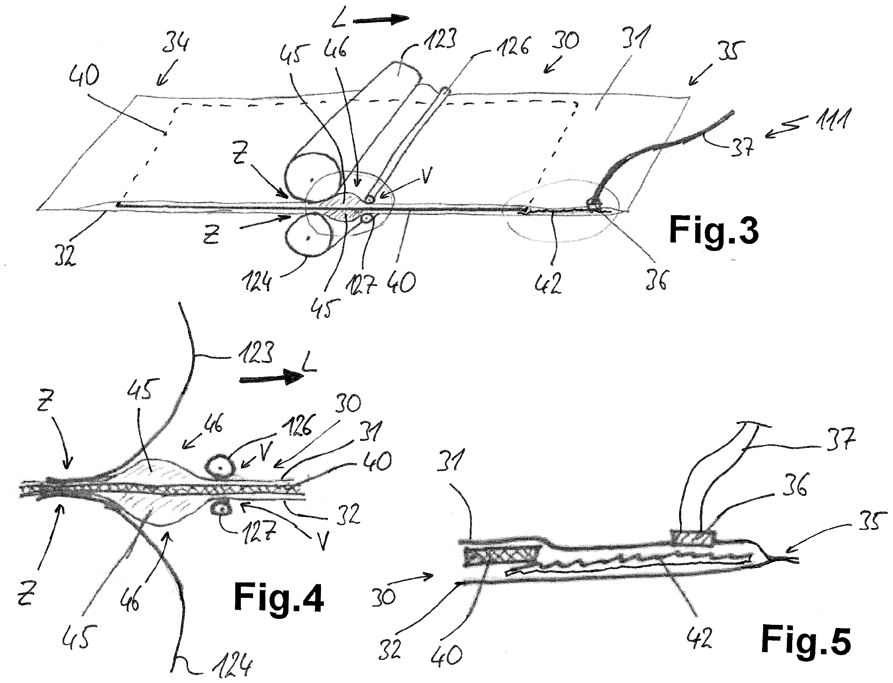

In der Vergrößerung der Seitenansicht der Fig. 4 ist zu sehen, wie eine Menge oder Blase 46 von flüssigem Matrixsystem 45 sowohl oben auf der Oberseite des Faserhalbzeugs 40 als auch an dessen Unterseite vorhanden ist zwischen der oberen Lage 31 und der unteren Lage 32 des Schlauchs 30. Dies ermöglicht gerade bei etwas dickeren Faserhalbzeugen 40 ein exakt gleichmäßiges und gleichartiges Durchtränken des Faserhalbzeugs 40 mit flüssigem Matrixsystem 45, nämlich von oben genauso wie von unten. Das Durchtränken erfolgt dann auch durch das gesamte Faserhalbzeug 40 hindurch. Bei der Ausgestaltung der Fig. 2 befindet sich das flüssige Matrixsystem sozusagen nur auf der Oberseite des Faserhalbzeugs 40. In entsprechender Form kann auch, wie zuvor beschrieben worden ist, ein Abstand der Vor-Zusammendrückwalzen 126 und 127 eingestellt werden, bevorzugt bleibt er aber gleich. Wie die Fig. 4 auch deutlich zeigt, ist ihr Abstand zueinander größer als bei den Zusammendrückwalzen 123 und 124. Insbesondere beträgt eine lichte Weite bzw. ein sogenannter Nipp dazwischen die Höhe des losen unbelasteten Faserhalbzeugs 40 samt der beiden Lagen 31 und 32 des Schlauchs 30. möglicherweise kann dies auch die Höhe des Faserhalbzeugs 40 sein, die sich einstellt, wenn der Schlauch 30 mit einem vorgesehenen Unterdruck abgesaugt worden ist. Dadurch wird möglicherweise die Höhe des losen Faserhalbzeugs 40 noch einmal etwas reduziert. Dann kann es unter Umständen zwar vorkommen, dass ein geringer Anteil des Matrixsystems 45 in Laufrichtung L sozusagen vor die Vor-Zusammendrückwalzen 126 und 127 gelangt. Dabei wird er aber im Wesentlichen bereits das Faserhalbzeug 40 durchtränken, was ja insgesamt gewünscht ist, so dass dies nicht zwingend als negativ anzusehen ist. Es sollte nur eben keine zu große Menge an Matrixsystem 45 vor die Vor-Zusammendrückwalzen 126 und 127 gelangen, da dann über die Breite des Zusammenrückens hinweg möglicherweise zu wenig Matrixsystem 45 vorhanden ist, um von den Zusammendrückwalzen 123 und 124 in das Faserhalbzeug 40 hineingedrückt zu werden.

In der Fig. 5 ist noch dargestellt, wie das rechte Ende des Faserhalbzeugs 40 die Fließhilfe 42 sozusagen etwas überlappt. Hier reicht die Fließhilfe 42 bis unterhalb des Absaugventils 36. Dargestellt ist ein Zustand noch ohne starkes Absaugen mittels des Absaugschlauchs 37, da ansonsten die beiden Lagen 31 und 32 des Schlauchs 30 deutlich enger am Faserhalbzeug 40 und an der Fließhilfe 42 anliegen würden. Des Weiteren ist hier auch der verschlossene rechte zweite Endbereich 35 zu erkennen.

Allgemein kann in der Praxis ein Unterdruck von etwa 400mbar bis 20mbar verwendet werden bzw. angelegt werden, vorteilhaft 300mbar bis 40mbar. Dies ist noch ohne allzu großen Aufwand erreichbar und bewirkt ein ausreichendes Absaugen von Luft aus dem Schlauch 30. Der Unterdruck sollte vorteilhaft dauerhaft gehalten werden. Falls dies nur durch ein vorgenanntes Einweg-Ventil alleine nicht möglich ist, sollte eine zum Absaugen verwendete Vakuumpumpe mehrfach oder sogar dauerhaft betrieben werden.

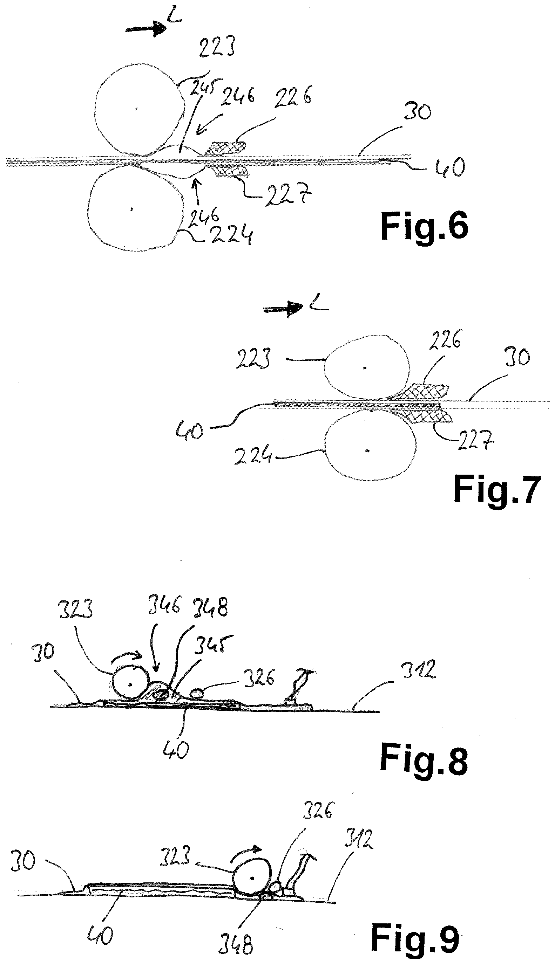

In der Fig. 6 ist in Anlehnung an die Darstellung der Fig. 4 dargestellt, wie das Verfahren durchgeführt wird mit einer oberen Zusammendrückwalze 223 und einer unteren Zusammendrückwalze 224, die unverändert sind. Ein Schlauch 30 mit einem Faserhalbzeug 40 darin wird bearbeitet. In Laufrichtung L kurz vor den Walzen 223 und 224 befindet sich eine Blase 246 mit Matrixsystem 245 darin. Dies ist oberhalb und unterhalb des Schlauchs 30 bzw. des Faserhalbzeugs 40 der Fall. Hier ist ein oberes Vor-Zusammendrückprofil 226 und ein unteres Vor-Zusammendrückprofil 227 zu den Walzen 223 und 224 hin spitz ausgebildet. Bei dem großen Abstand dazwischen gemäß Fig. 6 spielt dies noch keine Rolle. Bei fortgeschrittenem Verfahren gemäß der Fig. 7 ist zu erkennen, dass kurz vor Erreichen des Endes des Faserhalbzeugs 40 im Schlauch 30 der Abstand sehr gering ist. Die nach links weisende Spitze des oberen Vor-Zusammendrückprofils 226 ist nahezu bis an die obere Zusammendrückwalze 223 herangerückt. Entsprechendes gilt unten für das untere Vor-Zusammendrückprofil 227 und die untere Zusammendrückwalze 224. So wird der mögliche Raum für eine Blase des Matrixsystems 245 stark reduziert bzw. verschwindet nahezu vollständig. Da beinahe schon das rechte Ende des Faserhalbzeugs 40 erreicht ist, und das Tränken nahezu vollständig durchgeführt ist, kann so ein Verbrauch an flüssigem Matrixsystem 45 optimiert werden. So befindet sich nämlich bei sehr kleiner Blase das verbleibende Matrixsystem 245 direkt vor dem Spalt zwischen den beiden Walzen 223 und 224

In der Fig. 8 ist mit einer Auflage 312 dargestellt, wie ein in einer Blase 346 aus Matrixsystem 345 eingebrachter Verdrängungskörper 348 verwendet werden kann. Die Blase 346 ist gebildet zwischen einer Zusammendrückwalze 323 und einer Vor-Zusammendrückwalze 326 ähnlich der Fig. 2. Der Verdrängungskörper 348 kann beispielsweise ein Schlauch oder ein Ballon sein und Luft gefüllt sein und elastisch sein. Ist die Blase 346 noch relativ groß, weil der Abstand zwischen Zusammendrückwalze 323 und Vor-Zusammendrückwalze 326 noch relativ groß ist und gerade erst begonnen worden ist, das Faserhalbzeug 40 zu tränken, so ist auch der Verdrängungskörper 348 noch etwas größer. In der Fig. 9 ist für das Erreichen des Endes des Faserhalbzeugs 40 dargestellt, dass wiederum der Abstand zwischen Zusammendrückwalze 323 und Vor-Zusammendrückwalze 326 stark verringert worden ist. Dadurch ist die Blase 346 sozusagen verschwunden, und der Verdrängungskörper 348 ist auch deutlich zusammengedrückt. Er kann aber immer noch gut den Raum zwischen Zusammendrückwalze 323 und Vor-Zusammendrückwalze 326 auffüllen, da er das Matrixsystem 345 in das Faserhalbzeug 40 hineingedrückt worden ist bzw. dieser ausreichend getränkt worden ist.

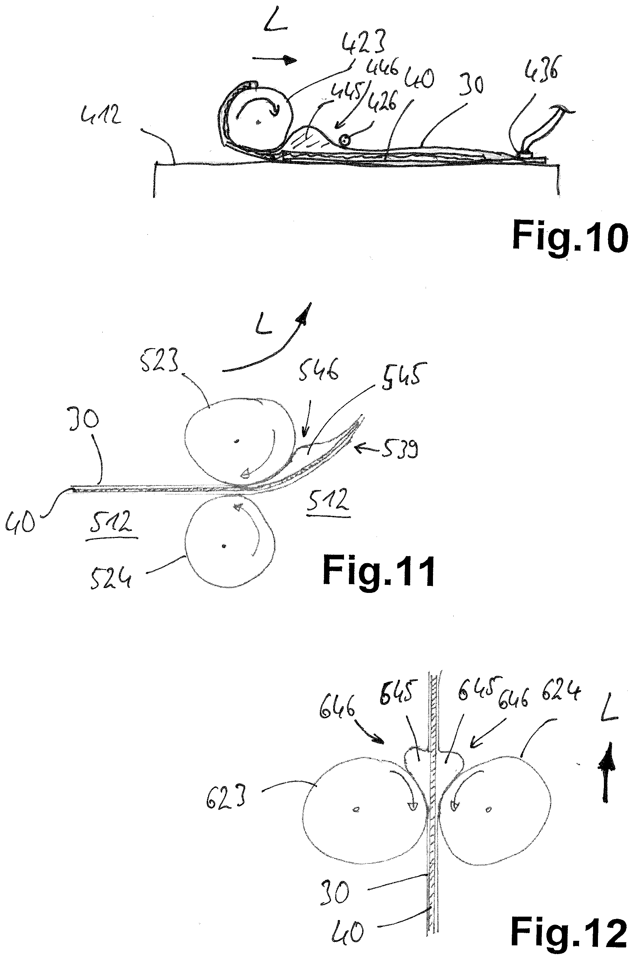

In der Fig. 10 ist für eine weitere Variante dargestellt, dass das Ausüben des Drucks nicht nur durch Bewegen entsprechend einem Rollen einer Walze 423 über ein auf einer Auflage 412 in einem Schlauch 30 angeordnetes Faserhalbzeug 40 erfolgen kann, wobei in dem Schlauch 30 flüssiges Matrixsystem 445 ist. Hier wird der Schlauch 30 auf die Walze 423 aufgewickelt, welche sich im Uhrzeigersinn dreht und dabei nach rechts entlang der Laufrichtung L des Verfahrens über die Auflage 412 bewegt wird. So wird auf den Schlauch 30 und das darin befindliche Faserhalbzeug 40 samt Matrixsystem 445 nicht nur kurzzeitig ein linienförmiger Druck ausgeübt, sondern bei aufgewickeltem Zustand ein dauerhafter Druck. Für das Aufwickeln ist es von Vorteil, wenn sich wie üblich etwas vor der Walze 423 ein Vor-Zusammendrückprofil 426 befindet, sodass zwischen den beiden eine Blase 446 des Matrixsystems 445 im Schlauch 30 gebildet ist. Auch hier wird vorteilhaft über ein Ablaufventil 436 Luft aus dem Schlauch 30 abgesaugt und so ein Unterdruck darin gebildet.

Ein Vorteil des Aufwickelns auf die Walze 423 kann auch darin liegen, dass so das fertig getränkte Faserhalbzeug gleich transportiert und ausgeliefert, alternativ gelagert werden kann. Alternativ dazu kann der Schlauch 30 mit dem getränkten Faserhalbzeug 40 darin abgewickelt werden und das Faserhalbzeug 40 aus dem Schlauch 30 entfernt und weiter verarbeitet werden.

In der Fig. 11 ist dargestellt, wie das Verfahren mit einer oberen Zusammendrückwalze 523 und einer unteren Zusammendrückwalze 524 ohne Vor-Zusammendrückprofil oder -walze durchgeführt werden kann. Dazu ist eine Kurve, entlang derer die beiden Zusammendrückwalzen 523 und 524 verfahren werden bzw. entlang derer ein Schlauch 30 bzw. eine dadurch gebildete Umhüllung 539 mit einem Faserhalbzeug 40 und flüssigem Matrixsystem 545 darin geführt ist, entlang der Laufrichtung L von horizontal kontinuierlich nach oben gebogen. Hier bildet die Laufrichtung L also eine Kurve und ist nicht gerade wie in den vorigen Ausführungsbeispielen. Allein durch die Schwerkraft bildet sich somit vor der oberen Zusammendrückwalze 523 eine Blase 546 des flüssigen Matrixsystems 545. Auch unterhalb des Faserhalbzeugs 40 könnte im Schlauch 30 eine solche Blase gebildet sein.

In einem nochmals weiteren Ausführungsbeispiel der Fig. 12 verläuft die Laufrichtung L senkrecht nach oben, entweder als Endphase des Verfahrens aus Fig. 11 oder ausschließlich und von Beginn an senkrecht nach oben. Hier sind eine linke Zusammendrückwalze 623 und eine rechte Zusammendrückwalze 624 vorgesehen, zwischen denen sich ein Schlauch 30 mit einem Faserhalbzeug 40 darin befindet. Auf beiden Seiten des Faserhalbzeugs 40 ist oberhalb der Zusammendrückwalzen 623 und 624 sowie quasi anliegend daran je eine Blase 646 mit flüssigem Matrixsystem bzw. Flüssigharz darin gebildet. Dies ermöglicht also ein gleichmäßiges Tränken des Faserhalbzeugs 40 von seinen beiden Seiten aus, was beispielsweise bei besonders dickem Faserhalbzeug 40 von Vorteil sein kann. Auch hier und in der Fig. 11 sollte wiederum, was nicht dargestellt ist, ein Unterdruck an den Schlauch 30 angelegt werden bzw. Luft abgesaugt werden wie zuvor beschrieben.

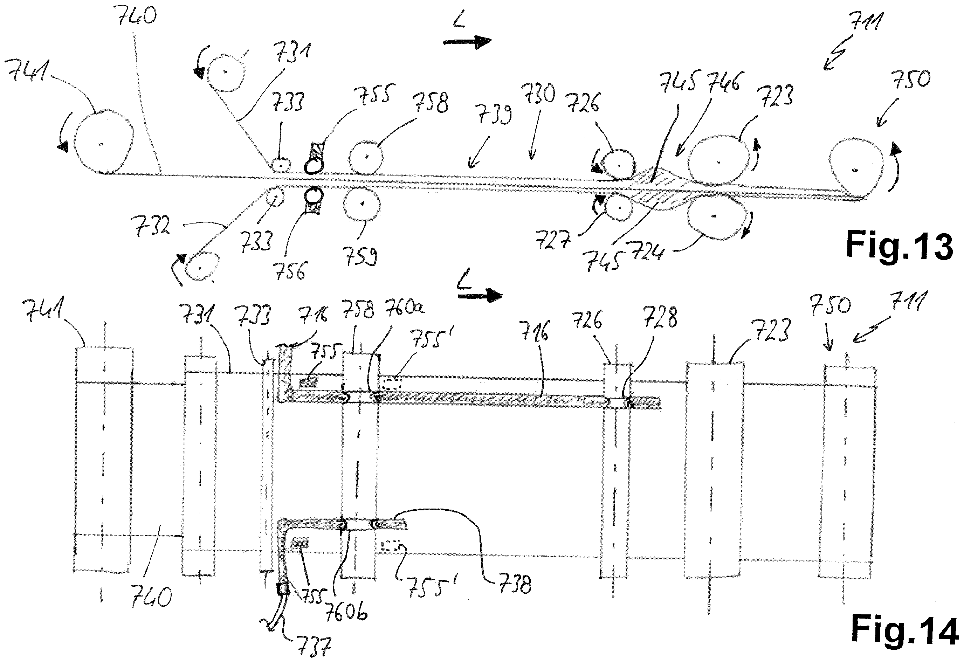

In der Fig. 13 ist in Seitenansicht und in der Fig. 14 von oben eine weitere Ausgestaltung einer Vorrichtung 711 dargestellt, mit der ein Faserhalbzeug 740 als Faserverbund oder -gelege mit einem Flüssigharz 745 als Matrixsystem getränkt bzw. imprägniert werden kann. Die Besonderheit liegt hier darin, dass wie vorbeschrieben das Faserhalbzeug 740 in großer Länge bzw. sozusagen endlos in einem Durchlaufverfahren mit dem Flüssigharz 745 getränkt wird. Dabei kommt das Faserhalbzeug 740 als langes breites Material von einer Vorratsrolle 741 und läuft nach rechts in die Vorrichtung 711 hinein. Von oben kommt eine breite obere Folienlage 731 und eine ähnlich breite untere Folienlage 732, jeweils auch von entsprechenden Vorratsrollen. Die Folienlagen 731 und 732 werden über entsprechende Umlenkwalzen 733 sozusagen flach an das Faserhalbzeug 740 herangeführt und von unten bzw. oben angelegt. Mittels eines oberen Seitenschweißers 755 und eines unteren Seitenschweißers 756, die gegeneinander drücken und beispielsweise umlaufende beheizte Räder sind, wie dies aus Folienverpackungsmaschinen bekannt ist, werden die beiden Folienlagen 731 und 732 miteinander verschweißt, und zwar luftdicht. So wird eine Umhüllung 739 bzw. ein Schlauch 730 gebildet. Dieses Verschweißen erfolgt seitlich außerhalb des dazwischen eingeschlossenen Faserhalbzeugs 740. Alternativ können die Seitenschweißer 755 und 756 auch weiter in Laufrichtung L rechts angeordnet sein, wie in der Fig. 14 gestrichelt dargestellt ist.

Durch die vorgenannten Seitenschweißer 756 und 755 wird also ein Folienschlauch 730 gebildet als vorgenannte Umhüllung 739. Zu Beginn des Verfahrens kann am Ende durch eine Querschweißung die Umhüllung 739 verschlossen werden, wie es vorstehend auch bereits beschrieben worden ist. In Laufrichtung L ziemlich weit rechts sind, ähnlich wie zuvor ausgebildet, eine obere Zusammendrückwalze 723 und eine untere Zusammendrückwalze 724 vorgesehen. Diese sind genauso zueinander angeordnet wie zuvor beschrieben, außerdem können sie genauso ausgebildet sein. In Laufrichtung L etwas davor bzw. links davon sind eine obere Vor-Zusammendrückwalze 726 und eine untere Vor-Zusammendrückwalze 727 angeordnet, die ebenso ausgebildet und zueinander angeordnet sind wie zuvor beschrieben. Dazwischen ist beispielhaft Flüssigharz 745 in einer Blase 746 vorgesehen, und zwar sowohl oberhalb des Faserhalbzeugs 740 als auch unterhalb davon, also an Oberseite und an Unterseite. So erfolgt mittels der Zusammendrückwalzen 723 und 724 ein besonders gutes Tränken bzw. Imprägnieren des Faserhalbzeugs 740 mit dem Flüssigharz 745 bzw. dem flüssigen Matrixsystem.

Als einzige Besonderheit weisen die obere Vor-Zusammendrückwalze 726 eine umlaufende Walzennut 728 auf, die auch anders ausgebildet sein kann, ebenso die untere Vor-Zusammendrückwalze 727. Die Walzennut 728 dient dazu, dass ein von links kommendes starres Einbringrohr 716 quasi oberhalb des Faserhalbzeugs 740 oder seitlich daneben in der Umhüllung aus Folie verläuft. So kann am freien Ende des Einbringrohrs 716 das Flüssigharz 745 ausgebracht werden, vorteilhaft kontinuierlich, möglicherweise auch in Intervallen. Damit dieses Flüssigharz 745 aus der Blase 746 nicht vor die Vor-Zusammendrückwalzen gerät, insbesondere an dem Einbringrohr 716 vorbei, ist eben die vorgenannte Walzennut 728 vorgesehen. Sie soll bewirken, dass die obere Vor-Zusammendrückwalze 726 bzw. beide Zusammendrückwalzen sozusagen am Einbringrohr 716 vorbei den Bereich oberhalb des Faserhalbzeugs 740 oder daneben abdichten, so dass hier nach Möglichkeit kein Flüssigharz 745 davor gelangen kann. Dargestellt ist hier eine im Wesentlichen abgerundete Walzennut 728, bei der das Einbringrohr 716 auch entsprechend gerundet ist. Vorteilhaft kann das Einbringrohr 716 einen rechteckigen Querschnitt aufweisen, möglicherweise auch einen nach oben halbrunden oder dreieckigen Querschnitt, der leichter abzudichten ist. So kann also das Flüssigharz 745 beim hier dargestellten kontinuierlichen Verfahren an das Faserhalbzeug 740 gebracht werden, insbesondere auch in den Bereich des Zusammendrückens der Umhüllung 739, die aus den beiden Folienlagen 731 und 732 gebildet ist.

Um den zweiten Effekt des Anlegens von Unterdruck in der Umhüllung zu bewirken, insbesondere bereits vor dem Bereich des Tränkens, also in Laufrichtung L vor den Vor-Zusammendrückwalzen 726 und 727, reicht ein Absaugrohr 738 von der Seite her in die Umhüllung. Ähnlich wie das Einbringrohr 716 ragt auch das Absaugrohr 738 in Laufrichtung L vor den Seitenschweißern 755 und 756 in die Umhüllung 739, also zwischen die beiden Folienlagen 731 und 732. Es ist mittels eines Absaugschlauchs 737 an eine vorbeschriebene Unterdruckpumpe angeschlossen. Über das Absaugrohr 738 wird also ein Unterdruck in der Umhüllung erzeugt. Da die Umhüllung am Ende in Laufrichtung L gesehen geschlossen ist und mittels der Seitenschweißer 755 und 756 auch an den Seiten, ist sie nur nach links zu offen. Hier kann ja nicht verschweißt werden. Dafür sind aber eine obere Abdrückwalze 758 und eine untere Abdrückwalze 759 vorgesehen, die mit relativ viel Druck gegeneinander anliegen und sozusagen über die Breite hinweg die Umhüllung verschließen, und zwar weitgehend luftdicht. Da das Absaugrohr 738 in Laufrichtung L darüber hinausragt, wird ein weitgehend abgeschlossener Raum gebildet, in dem der erfindungsgemäß gewünschte und benötigte Unterdruck erzeugt werden kann. Da aber sowohl das Absaugrohr 738 in diesen Raum an den Abdrückwalzen als auch das vorbeschriebene Einbringrohr 716 vorbei reichen müssen, weist zumindest die obere Abdrückwalze 758, möglicherweise auch beide spiegelbildlich zueinander, eine Walzennut 760a für das Einbringrohr 716 und eine Walzennut 760b für das Absaugrohr 738 auf. Hier ist aufgrund der geforderten Dichtheitseigenschaften besonders auf die Abstimmung der Querschnitte zu achten. Wenn die Walzennuten 760a und 760b, was auch für die Walzennut 728 an der oberen Vor-Zusammendrückwalze 726 gelten kann, auf beide Abdrückwalzen 758 und 759 sozusagen aufgeteilt sind, können Probleme bei einer seitlichen Verkürzung einer der Folienlagen 731 oder 732 vermieden werden. Des Weiteren können so auch Rohre mit kreisrundem Querschnitt gut abgedichtet werden. Schließlich kann vorteilhaft noch vorgesehen sein, dass Einbringrohr 716 und Absaugrohr 738 als Baueinheit ausgebildet sind, so dass nur ein einziger Bereich abgedichtet werden muss. Die beiden Leitungsquerschnitte können dann nebeneinander oder koaxial einander umgebend angeordnet sein.

Für die Abdrückwalzen 758 und 759 kann vorteilhaft vorgesehen sein, dass sie, abgesehen von Walzennuten 760, nicht nur gleichbleibenden Querschnitt bzw. Durchmesser aufweisen, sondern auch daran angepasst oder anpassbar sind, wie dick und wie breit das eingeführte Faserhalbzeug 740 ist. Dann kann ein möglichst gutes Verschließen durch die Abdrückwalzen 758 und 759 erfolgen, um möglichst gut einen Unterdruck in das Innere der Umhüllung 739 anlegen zu können. Voraussichtlich ist aber eine erhöhte Abpumpleistung an dem Absaugschlauch 737 vorzusehen, jedenfalls mehr als bei den zuvor beschriebenen Ausführungsbeispielen.

Hinter den Zusammendrückwalzen 723 und 724 kann das fertig imprägnierte Faserhalbzeug 740 auf einen Rollenvorrat 750 aufgewickelt werden. Dieser kann beispielsweise 10 m bis 50 m oder sogar 100 m an mit Flüssigharz getränktem Faserhalbzeug 740 aufweisen und dann zur Verarbeitung an eine andere Stelle gebracht werden. Aus dem daraus aufgewickelten nahezu endlosen und imprägnierten Faserhalbzeug 740 können entweder einzelne Stücke abgelängt werden, möglicherweise auch in Form gebracht oder gestanzt werden.

## Patentansprüche

1. Verfahren zum Tränken eines Faserhalbzeugs (40, 740) mit einem flüssigen Matrixsystem (45, 745), insbesondere eines Textils oder eines Faserverbunds (40, 740) aus technischen Fasern mit einem Flüssigharz (45, 745), wobei folgende Schritte durchgeführt werden:
- das Faserhalbzeug (40, 740) in flacher Form wird bereitgestellt und wird in flacher Form in eine flexible und abdichtbare Umhüllung (539, 739) gebracht,
- vor dem Einbringen oder nach dem Einbringen des Faserhalbzeugs (40, 740) in die Umhüllung (539, 739) wird das flüssige Matrixsystem (45, 745) in die Umhüllung (539, 739) gebracht, vorzugsweise getrennt von und mit Abstand zu dem Faserhalbzeug (40, 740),
- auf die Umhüllung (539, 739) wird an einem Endbereich der Umhüllung (539, 739) beginnend über die gesamte Breite der Umhüllung (539, 739) durchgehend und lückenlos Druck von oben und/oder von unten aufgebracht, vorzugsweise mindestens 0,1 N/cm², als Zusammendrücken (Z),
- das Zusammendrücken (Z) wird kontinuierlich bzw. ohne Unterbrechung entlang einer Laufrichtung (L) des Verfahrens, die von einem ersten Endbereich (34) der Umhüllung (539, 739) zu einem zweiten Endbereich (35) der Umhüllung (539, 739) geht, mindestens über die gesamte Länge des Faserhalbzeugs (40, 740) durchgeführt,
wobei das Zusammendrücken (Z) an einem Bereich (34) der Umhüllung (539, 739) beginnt, und wobei sich das flüssige Matrixsystem (45, 745) in Laufrichtung (L) zwischen dem beginnenden Zusammendrücken (Z) und dem Faserhalbzeug (40, 740) befindet, **dadurch gekennzeichnet, dass** in Laufrichtung (L) vor dem Zusammendrücken (Z) ein zusätzliches Vor-Zusammendrücken (V) durchgehend und lückenlos über die gesamte Breite der Umhüllung (539, 739) durchgeführt wird.

2. Verfahren nach Anspruch 1, **dadurch gekennzeichnet, dass** an der Umhüllung (539, 739), vorzugsweise an dem zweiten Endbereich (35), ein Unterdruck an das Innere der Umhüllung (539, 739) angelegt wird, insbesondere alle Luft aus der Umhüllung (539, 739) abgesaugt wird, wobei vorzugsweise vor dem Anlegen des Unterdrucks das flüssige Matrixsystem (45, 745) und das Faserhalbzeug (40, 740) in die Umhüllung (539, 739) eingebracht worden sind und die Umhüllung (539, 739) bis auf einen Absauganschluss (36, 436) in dem zweiten Endbereich (35) verschlossen und abgedichtet worden ist.

3. Verfahren nach Anspruch 2, **dadurch gekennzeichnet, dass** die Umhüllung (539, 739) verschlossen und abgedichtet ist bis auf mindestens einen Absauganschluss (36, 436), wobei vorzugsweise die Umhüllung (539, 739) nach dem Einbringen des flüssigen Matrixsystems (45, 745), wobei vorzugsweise das flüssige Matrixsystem (45, 745) in einem Bereich zwischen dem ersten Endbereich (34) und dem Faserhalbzeug (40, 740) eingebracht worden ist, an einem weiteren zuvor offenen Bereich, insbesondere an dem zweiten Endbereich (35), verschlossen worden ist.

4. Verfahren nach einem der vorhergehenden Ansprüche, **dadurch gekennzeichnet, dass** das Zusammendrücken (Z) streifenartig oder linienartig durchgeführt wird, insbesondere mindestens so breit wie die Umhüllung (539, 739) in Richtung senkrecht zur Laufrichtung (L), wobei vorzugsweise das Zusammendrücken (Z) mittels wenigstens eines Zusammendrückprofils (23, 24, 123, 124, 223, 224, 323, 324, 423, 424, 723, 724) durchgeführt wird, insbesondere mit einer rotierenden Zusammendrückwalze (23, 24, 123, 124, 223, 224, 323, 324, 423, 424, 723, 724).

5. Verfahren nach einem der vorhergehenden Ansprüche, **dadurch gekennzeichnet, dass** das Vor-Zusammendrücken (V) mit einem Abstand von 2 cm bis 10 cm in Laufrichtung (L) vor dem Zusammendrücken (Z) erfolgt.

6. Verfahren nach einem der vorhergehenden Ansprüche, **dadurch gekennzeichnet, dass** das Vor-Zusammendrücken (V) streifenartig oder linienartig durchgeführt wird, insbesondere mindestens so breit wie die Umhüllung (539, 739) in Richtung senkrecht zur Laufrichtung (L), wobei vorzugsweise das Vor-Zusammendrücken (V) mittels wenigstens eines Vor-Zusammendrückprofils (26, 27, 126, 127, 226, 227, 326, 327, 426, 427, 726, 727) durchgeführt wird.

7. Verfahren nach Anspruch 5 oder 6, **dadurch gekennzeichnet, dass** das Vor-Zusammendrücken (V) weniger stark durchgeführt wird als das Zusammendrücken (Z), insbesondere mit einem Druck zwischen 5% und 70% des Zusammendrückens (Z) oder mit mehr Abstand.

8. Verfahren nach einem der vorhergehenden Ansprüche, **dadurch gekennzeichnet, dass** das Zusammendrücken (Z), insbesondere auch das Vor-Zusammendrücken (V) nach einem der Ansprüche 5 bis 7, so weit durchgeführt wird, dass die Umhüllung (539, 739) gegen das Faserhalbzeug (40, 740) gedrückt wird von beiden gegenüberliegenden Seiten.

9. Verfahren nach einem der Ansprüche 6 bis 8, **dadurch gekennzeichnet, dass** das Zusammendrücken (Z) und/oder das Vor-Zusammendrücken (V) an einem Bereich (34, 35) der Umhüllung (539, 739) samt Faserhalbzeug (40, 740) darin beginnt, an dem sich kein flüssiges Matrixsystem (45, 745) befindet, wobei vorzugsweise zu Beginn des Vor-Zusammendrückens (V) und des Zusammendrückens (Z) das flüssige Matrixsystem (45, 745) sich zwischen dem Vor-Zusammendrücken (V) und dem Zusammendrücken (Z) befindet.

10. Verfahren nach einem der Ansprüche 6 bis 9, **dadurch gekennzeichnet, dass** während des Zusammendrückens (Z) und des Vor-Zusammendrückens (V) der Abstand in Laufrichtung (L) zwischen dem Zusammendrücken (Z) und dem Vor-Zusammendrücken (V) sich nicht vergrößert, sobald und solange das Zusammendrücken (Z) auf das Faserhalbzeug (40, 740) erfolgt, wobei vorzugsweise der Abstand geringer wird.

11. Verfahren nach Anspruch 10, **dadurch gekennzeichnet, dass** das Vor-Zusammendrücken (V) mit einem Abstand vom vorderen Ende des Faserhalbzeugs (40, 740) entgegen der Laufrichtung (L) beginnt, wobei vorzugsweise der Abstand maximal 5 cm beträgt, wobei insbesondere das Zusammendrücken (Z) zuerst entlang der Laufrichtung (L) begonnen wird, bevor das Vor-Zusammendrücken (V) erfolgt und/oder entlang der Laufrichtung (L) bewegt wird.

12. Vorrichtung zur Durchführung des Verfahrens nach einem der vorhergehenden Ansprüche, wobei sie aufweist:
- eine ebene/flächige Auflage (12, 312, 412, 512) für die Umhüllung (539, 739),
- Mittel (16, 716) zum Einbringen des flüssigen Matrixsystems (45, 745) in die Umhüllung (539, 739),
- Mittel (37, 738) zum Absaugen von Luft aus der Umhüllung (539, 739),
- Mittel (23, 24, 123, 124, 223, 224, 323, 324, 423, 424, 723, 724) zum Zusammendrücken der Umhüllung (539, 739),
- Mittel zum Erzeugen einer Relativbewegung zwischen der Umhüllung (539, 739) und den Mitteln (23, 24, 123, 124, 223, 224, 323, 324, 423, 424, 723, 724) zum Zusammendrücken der Umhüllung (539, 739) relativ zueinander,
**dadurch gekennzeichnet, dass** sie für das Vor-Zusammendrücken (V) wenigstens ein Vor-Zusammendrückprofil (26, 126, 226, 326, 426, 726) auf mindestens einer Seite der Umhüllung (539, 739) aufweist, wobei das Vor-Zusammendrückprofil (26, 126, 226, 326, 426, 726) eine Breite aufweist, die mindestens der Breite der Umhüllung (539, 739) entspricht bzw. so breit ist wie das Zusammendrücken (Z), wobei dem Vor-Zusammendrückprofil (26, 126, 226, 326, 426, 726) auf einer Seite der Umhüllung (539, 739) gegenüberliegend an einer anderen gegenüberliegenden Seite der Umhüllung (539, 739) ein Gegen-Vor-Zusammendrückprofil (27, 127, 227, 327, 427, 727) angeordnet ist.

13. Vorrichtung nach Anspruch 12, **dadurch gekennzeichnet, dass** sie für das Zusammendrücken wenigstens eine Zusammendrückwalze (23, 24, 123, 124, 223, 224, 323, 324, 423, 424, 723, 724) aufweist und die Umhüllung (539, 739) während des Verfahrens bzw. während des Zusammendrückens (Z) zwischen der Auflage (12, 312, 412, 512) und der Zusammendrückwalze (23, 24, 123, 124, 223, 224, 323, 324, 423, 424, 723, 724) angeordnet ist, wobei die Zusammendrückwalze (23, 24, 123, 124, 223, 224, 323, 324, 423, 424, 723, 724) mindestens so breit ist wie die Umhüllung (539, 739), wobei diese Zusammendrückwalze (23, 24, 123, 124, 223, 224, 323, 324, 423, 424, 723, 724) während des Zusammendrückens (Z) entlang der Laufrichtung (L) drehbar ist, insbesondere ohne Schlupf zwischen Zusammendrückwalze (23, 24, 123, 124, 223, 224, 323, 324, 423, 424, 723, 724) und Umhüllung (539, 739) drehbar ist.

14. Vorrichtung nach Anspruch 13, **dadurch gekennzeichnet, dass** die Zusammendrückwalze (23, 123, 223, 323, 423, 723) oberhalb der Umhüllung (539, 739) angeordnet ist und eine Gegen-Zusammendrückwalze (24, 124, 224, 324, 424, 724) dieser gegenüber unterhalb der Umhüllung (539, 739) angeordnet ist derart, dass in einem Nipp zwischen Zusammendrückwalze (23, 123, 223, 323, 423, 723) und Gegen-Zusammendrückwalze (24, 124, 224, 324, 424, 724) die Umhüllung (539, 739) ggf. mit dem Faserhalbzeug (40, 740) darin verläuft, wobei Zusammendrückwalze (23, 123, 223, 323, 423, 723) und Gegen-Zusammendrückwalze (24, 124, 224, 324, 424, 724) gegenläufig drehbar sind, wobei vorzugsweise der Nipp derart eingestellt ist, dass er an einer vorgegebenen Stelle die Dicke des Faserhalbzeugs (40, 740) getränkt mit flüssigem Matrixsystem (45, 745) plus die Dicke der Umhüllung (539, 739) beträgt.

15. Vorrichtung nach einem der Ansprüche 12 bis 14, **dadurch gekennzeichnet, dass** das Vor-Zusammendrückprofil (26, 27, 126, 127, 226, 227, 326, 327, 426, 427, 726, 727) ein runder Stab oder eine runde Walze ist.

## Claims

1. Method for impregnating a semi-finished fibre product (40, 740) with a liquid matrix system (45, 745), in particular a textile or a fibre composite (40, 740) of technical fibres with a liquid resin (45, 745), wherein the following steps are carried out:
- the semi-finished fibre product (40, 740) in flat form is provided and is placed in flat form in a flexible and sealable envelope (539, 739),
- the liquid matrix system (45, 745) is introduced into the envelope (539, 739), preferably separately from and at a distance from the semi-finished fibre product (40, 740), before or after introduction of the semi-finished fibre product (40, 740) into the envelope (539, 739),
- pressure is applied to the envelope (539, 739) from above and/or from below, preferably at least 0.1 N/cm², as compression (Z), starting at one end region of the envelope (539, 739) over the entire width of the envelope (539, 739), continuously and without gaps,
- the compression (Z) is carried out continuously or without interruption along a direction of travel (L) of the process, which runs from a first end region (34) of the envelope (539, 739) to a second end region (35) of the envelope (539, 739), at least over the entire length of the semi-finished fibre product (40, 740),
wherein the compression (Z) begins at a region (34) of the envelope (539, 739), and wherein the liquid matrix system (45, 745) is located in the direction of travel (L) between the beginning compression (Z) and the semi-finished fibre product (40, 740), **characterised in that** an additional pre-compression (V) is carried out continuously and without gaps over the entire width of the envelope (539, 739) in the direction of travel (L) before the compression (Z).

2. Method according to claim 1, **characterised in that** a negative pressure is applied to the inside of the envelope (539, 739), preferably at the second end region (35), in particular all air is sucked out of the envelope (539, 739), the liquid matrix system (45, 745) and the semi-finished fibre product (40, 740) having preferably been introduced into the envelope (539, 739) before the application of the negative pressure and the envelope (539, 739) having been closed and sealed except for a suction connection (36, 436) in the second end region (35).

3. Method according to claim 2, **characterised in that** the envelope (539, 739) is closed and sealed except for at least one suction connection (36, 436), preferably the envelope (539, 739) being closed and sealed after the introduction of the liquid matrix system (45, 745), wherein preferably the liquid matrix system (45, 745) has been introduced in a region between the first end region (34) and the semi-finished fibre product (40, 740), has been closed at a further previously open region, in particular at the second end region (35).

4. Method according to one of the preceding claims, **characterised in that** the compression (Z) is carried out in a strip-like or line-like manner, in particular at least as wide as the envelope (539, 739) in the direction perpendicular to the direction of travel (L), wherein the compression (Z) is preferably carried out by means of at least one compression profile (23, 24, 123, 124, 223, 224, 323, 324, 423, 424, 723, 724), in particular with a rotating compression roller (23, 24, 123, 124, 223, 224, 323, 324, 423, 424, 723, 724).

5. Method according to one of the preceding claims, **characterised in that** the pre-compression (V) takes place at a distance of 2 cm to 10 cm in the direction of travel (L) before the compression (Z).

6. Method according to one of the preceding claims, **characterised in that** the pre-compression (V) is carried out in a strip-like or line-like manner, in particular at least as wide as the envelope (539, 739) in the direction perpendicular to the direction of travel (L), the pre-compression (V) preferably being carried out by means of at least one pre-compression profile (26, 27, 126, 127, 226, 227, 326, 327, 426, 427, 726, 727).

7. Method according to claim 5 or 6, **characterised in that** the pre-compression (V) is carried out less strongly than the compression (Z), in particular with a pressure between 5% and 70% of the compression (Z) or with more distance.

8. Method according to one of the preceding claims, **characterised in that** the compression (Z), in particular also the pre-compression (V) according to one of claims 5 to 7, is carried out to such an extent that the envelope (539, 739) is pressed against the semi-finished fibre product (40, 740) from both opposite sides.

9. Method according to one of claims 6 to 8, **characterised in that** the compression (Z) and/or the pre-compression (V) begins at a region (34, 35) of the envelope (539, 739) together with the semi-finished fibre product (40, 740) therein, at which no liquid matrix system (45, 745) is located, wherein preferably at the beginning of the pre-compression (V) and the compression (Z) the liquid matrix system (45, 745) is located between the pre-compression (V) and the compression (Z).

10. Method according to any one of claims 6 to 9, **characterised in that** during the compression (Z) and the pre-compression (V), the distance in the direction of travel (L) between the compression (Z) and the pre-compression (V) does not increase as soon as and as long as the compression (Z) onto the semi-finished fibre product (40, 740) takes place, preferably the distance becomes smaller.

11. Method according to claim 10, **characterised in that** the pre-compression (V) begins at a distance from the front end of the semi-finished fibre product (40, 740) counter to the direction of travel (L), the distance preferably being at most 5 cm, the compression (Z) in particular being started first along the direction of travel (L) before the pre-compression (V) takes place and/or is moved along the direction of travel (L).

12. Device for carrying out the method according to one of the preceding claims, wherein it comprises
- a flat/surface support (12, 312, 412, 512) for the envelope (539, 739),
- means (16, 716) for introducing the liquid matrix system (45, 745) into the envelope (539, 739),
- means (37, 738) for extracting air from the envelope (539, 739),
- means (23, 24, 123, 124, 223, 224, 323, 324, 423, 424, 723, 724) for compressing the envelope (539, 739),
- means for producing a relative movement between the envelope (539, 739) and the means (23, 24, 123, 124, 223, 224, 323, 324, 423, 424, 723, 724) for compressing the envelope (539, 739) relative to one another,
**characterised in that** for the pre-compression (V) it has at least one pre-compression profile (26, 126, 226, 326, 426, 726) on at least one side of the envelope (539, 739), wherein the pre-compression profile (26, 126, 226, 326, 426, 726) has a width which corresponds at least to the width of the envelope (539, 739) or is as wide as the pre-compression profile (26, 126, 226, 326, 426, 726). as wide as the compression (Z), wherein a counter-pre-compression profile (27, 127, 227, 327, 427, 727) is arranged opposite the pre-compression profile (26, 126, 226, 326, 426, 726) on one side of the envelope (539, 739) on another opposite side of the envelope (539, 739).

13. Device according to claim 12, **characterised in that** it has at least one compression roller (23, 24, 123, 124, 223, 224, 323, 324, 423, 424, 723, 724) for the compression and the envelope (539, 739) during the process or, as the case may be, during the compression (Z). during the compression (Z) between the support (12, 312, 412, 512) and the compression roller (23, 24, 123, 124, 223, 224, 323, 324, 423, 424, 723, 724), wherein the compression roller (23, 24, 123, 124, 223, 224, 323, 324, 423, 424, 723, 724) is at least as wide as the envelope (539, 739), wherein this compression roller (23, 24, 123, 124, 223, 224, 323, 324, 423, 424, 723, 724) is rotatable along the direction of travel (L) during compression (Z), in particular is rotatable without slippage between the compression roller (23, 24, 123, 124, 223, 224, 323, 324, 423, 424, 723, 724) and the envelope (539, 739).

14. Device according to claim 13, **characterised in that** the compression roller (23, 123, 223, 323, 423, 723) is arranged above the envelope (539, 739) and a counter-compression roller (24, 124, 224, 324, 424, 724) is arranged opposite the latter below the envelope (539, 739) in such a way that in a nip between the compression roller (23, 123, 223, 323, 423, 723) and the counter-compression roller (24, 124, 224, 324, 424, 724) the envelope (539, 739), if necessary with the semi-finished fibre product (40, 740) extending therein, wherein the compression roller (23, 123, 223, 323, 423, 723) and the counter-compression roller (24, 124, 224, 324, 424, 724) are rotatable in opposite directions, wherein preferably the nip is set such that at a predetermined point it is the thickness of the semi-finished fibre product (40, 740) impregnated with liquid matrix system (45, 745) plus the thickness of the envelope (539, 739).

15. Device according to one of claims 12 to 14, **characterised in that** the pre-compression profile (26, 27, 126, 127, 226, 227, 326, 327, 426, 427, 726, 727) is a round rod or a round roller.

## Revendications

1. Procédé d'imprégnation d'un produit semi-fini fibreux (40, 740) avec un système de matrice liquide (45, 745), en particulier d'un textile ou d'un composite fibreux (40, 740) de fibres techniques avec une résine liquide (45, 745), les étapes suivantes étant réalisées :
- le produit semi-fini fibreux (40, 740) sous forme plate est fourni et est placé sous forme plate dans une enveloppe (539, 739) flexible et pouvant être rendue étanche,
- avant l'introduction ou après l'introduction du produit semi-fini fibreux (40, 740) dans l'enveloppe (539, 739), le système de matrice liquide (45, 745) est introduit dans l'enveloppe (539, 739), de préférence séparément du produit semi-fini fibreux (40, 740) et à distance de celui-ci,
- on applique sur l'enveloppe (539, 739) une pression par le haut et/ou par le bas, de préférence d'au moins 0,1 N/cm², en tant que compression (Z), en commençant par une zone d'extrémité de l'enveloppe (539, 739) et sur toute la largeur de l'enveloppe (539, 739), de manière continue et sans espace,
- la compression (Z) est effectuée en continu ou sans interruption le long d'une direction de déplacement (L) du procédé, qui va d'une première zone d'extrémité (34) de l'enveloppe (539, 739) à une deuxième zone d'extrémité (35) de l'enveloppe (539, 739), au moins sur toute la longueur du produit semi-fini fibreux (40, 740),
la compression (Z) commençant au niveau d'une zone (34) de l'enveloppe (539, 739), et le système de matrice liquide (45, 745) se trouvant, dans la direction de déplacement (L), entre la compression (Z) qui commence et le produit semi-fini fibreux (40, 740), **caractérisé en ce que**, dans la direction de déplacement (L), avant la compression (Z), une pré-compression supplémentaire (V) est effectuée de manière continue et sans espace sur toute la largeur de l'enveloppe (539, 739).

2. Procédé selon la revendication 1, **caractérisé en ce qu'**une dépression est appliquée à l'intérieur de l'enveloppe (539, 739), de préférence au niveau de la deuxième zone d'extrémité (35), en particulier tout l'air est aspiré hors de l'enveloppe (539, 739), de préférence, avant l'application de la dépression, le système de matrice liquide (45, 745) et le produit semi-fini fibreux (40, 740) ayant été introduits dans l'enveloppe (539, 739) et l'enveloppe (539, 739) ayant été fermée et scellée à l'exception d'un raccord d'aspiration (36, 436) dans la deuxième zone d'extrémité (35).

3. Procédé selon la revendication 2, **caractérisé en ce que** l'enveloppe (539, 739) est fermée et scellée à l'exception d'au moins un orifice d'aspiration (36, 436), l'enveloppe (539, 739) étant de préférence fermée après l'introduction du système de matrice liquide (45, 745), le système de matrice liquide (45, 745) ayant de préférence été introduit dans une zone située entre la première zone d'extrémité (34) et le produit semi-fini fibreux (40, 740), ayant été fermé au niveau d'une autre zone précédemment ouverte, en particulier au niveau de la deuxième zone d'extrémité (35).

4. Procédé selon l'une quelconque des revendications précédentes, **caractérisé en ce que** la compression (Z) est réalisée sous forme de bande ou de ligne, notamment au moins aussi large que l'enveloppe (539, 739) dans la direction perpendiculaire à la direction de défilement (L), de préférence, la compression (Z) étant effectué au moyen d'au moins un profilé de compression (23, 24, 123, 124, 223, 224, 323, 324, 423, 424, 723, 724), notamment avec un rouleau de compression rotatif (23, 24, 123, 124, 223, 224, 323, 324, 423, 424, 723, 724).

5. Procédé selon l'une quelconque des revendications précédentes, **caractérisé en ce que** le pré-compression (V) est effectué à une distance de 2 cm à 10 cm dans le sens de défilement (L) avant la compression (Z).

6. Procédé selon l'une quelconque des revendications précédentes, **caractérisé en ce que** la pré-compression (V) est réalisée en bande ou en ligne, notamment au moins aussi large que l'enveloppe (539, 739) dans la direction perpendiculaire à la direction de défilement (L), de préférence la pré-compression (V) est réalisée au moyen d'au moins un profil de pré-compression (26, 27, 126, 127, 226, 227, 326, 327, 426, 427, 726, 727).

7. Procédé selon la revendication 5 ou 6, **caractérisé en ce que** la pré-compression (V) est réalisée avec moins de force que la compression (Z), notamment avec une pression comprise entre 5% et 70% de la compression (Z) ou avec plus d'écart.

8. Procédé selon l'une quelconque des revendications précédentes, **caractérisé en ce que** la compression (Z), en particulier également la pré-compression (V) selon l'une quelconque des revendications 5 à 7, est effectuée jusqu'à ce que l'enveloppe (539, 739) soit pressée contre le produit semi-fini fibreux (40, 740) par les deux côtés opposés.

9. Procédé selon l'une quelconque des revendications 6 à 8, **caractérisé en ce que** la compression (Z) et/ou la pré-compression (V) commence au niveau d'une zone (34, 35) de l'enveloppe (539, 739) avec le produit semi-fini fibreux (40, 740) à l'intérieur, où aucun système de matrice liquide (45, 745) n'est présent, de préférence au début de la pré-compression (V) et de la compression (Z), le système de matrice liquide (45, 745) étant présent entre la pré-compression (V) et la compression (Z).

10. Procédé selon l'une quelconque des revendications 6 à 9, **caractérisé en ce que**, pendant la compression (Z) et la pré-compression (V), la distance dans le sens de défilement (L) entre la compression (Z) et la pré-compression (V) n'augmente pas dès et tant que la compression (Z) est effectuée sur le produit semi-fini fibreux (40, 740), de préférence en diminuant ladite distance.

11. Procédé selon la revendication 10, **caractérisé en ce que** la pré-compression (V) commence à une distance de l'extrémité avant du produit semi-fini fibreux (40, 740) dans le sens opposé au sens d'avancement (L), la distance étant de préférence de 5 cm au maximum, la compression (Z) étant en particulier d'abord commencée le long du sens d'avancement (L) avant que la pré-compression (V) ne soit effectuée et/ou déplacée le long du sens d'avancement (L).

12. Dispositif pour la mise en oeuvre du procédé selon l'une quelconque des revendications précédentes, comprenant :
- un support plan/surface (12, 312, 412, 512) pour l'enveloppe (539, 739),
- des moyens (16, 716) pour introduire le système de matrice liquide (45, 745) dans l'enveloppe (539, 739),
- des moyens (37, 738) pour aspirer l'air de l'enveloppe (539, 739),
- des moyens (23, 24, 123, 124, 223, 224, 323, 324, 423, 424, 723, 724) pour comprimer l'enveloppe (539, 739),
- des moyens pour générer un mouvement relatif entre l'enveloppe (539, 739) et les moyens (23, 24, 123, 124, 223, 224, 323, 324, 423, 424, 723, 724) pour comprimer l'enveloppe (539, 739) les uns par rapport aux autres,
**caractérisé en ce qu'**il comprend, pour la pré-compression (V), au moins un profil de pré-compression (26, 126, 226, 326, 426, 726) sur au moins un côté de l'enveloppe (539, 739), le profil de pré-compression (26, 126, 226, 326, 426, 726) ayant une largeur qui est au moins égale ou supérieure à la largeur de l'enveloppe (539, 739). aussi large que la compression (Z), le profil de pré-compression (26, 126, 226, 326, 426, 726) étant disposé à l'opposé de l'enveloppe (539, 739) sur un côté de l'enveloppe (539, 739) sur un autre côté opposé de l'enveloppe (539, 739), un contre-profil de pré-compression (27, 127, 227, 327, 427, 727) étant disposé.

13. Dispositif selon la revendication 12, **caractérisé en ce qu'**il comporte, pour la compression, au moins un rouleau de compression (23, 24, 123, 124, 223, 224, 323, 324, 423, 424, 723, 724) et **en ce que** l'enveloppe (539, 739), pendant le procédé, respectivement pendant la compression (Z), entre le support (12, 312, 412, 512) et le rouleau de compression (23, 24, 123, 124, 223, 224, 323, 324, 423, 424, 723, 724), le rouleau de compression (23, 24, 123, 124, 223, 224, 323, 324, 423, 424, 723, 724) étant au moins aussi large que l'enveloppe (539, 739), ce rouleau de compression (23, 24, 123, 124, 223, 224, 323, 324, 423, 424, 723, 724) pouvant tourner le long de la direction de déplacement (L) pendant la compression (Z), en particulier pouvant tourner sans patinage entre le rouleau de compression (23, 24, 123, 124, 223, 224, 323, 324, 423, 424, 723, 724) et l'enveloppe (539, 739).

14. Dispositif selon la revendication 13, **caractérisé en ce que** le rouleau de compression (23, 123, 223, 323, 423, 723) est disposé au-dessus de l'enveloppe (539, 739) et un contre-rouleau de compression (24, 124, 224, 324, 424, 724) est disposé en face de celui-ci en dessous de l'enveloppe (539, 739) de telle sorte que, dans une ligne de contact entre le rouleau de compression (23, 123, 223, 323, 423, 723) et le rouleau de contre-compression (24, 124, 224, 324, 424, 724), l'enveloppe (539, 739) est éventuellement avec le produit semi-fini fibreux (40, 740) à l'intérieur, le rouleau de compression (23, 123, 223, 323, 423, 723) et le rouleau de contre-compression (24, 124, 224, 324, 424, 724) pouvant tourner en sens inverse, le téton étant de préférence réglé de manière à être égal, en un point donné, à l'épaisseur du produit semi-fini fibreux (40, 740) imprégné du système de matrice liquide (45, 745) plus l'épaisseur de l'enveloppe (539, 739).

15. Dispositif selon l'une quelconque des revendications 12 à 14, **caractérisé en ce que** le profil de pré-compression (26, 27, 126, 127, 226, 227, 326, 327, 426, 427, 726, 727) est une barre ou un rouleau rond.
